# EUROPEAN PATENT APPLICATION

(11) **EP 4 818 804 A1**
(43) Date of publication of application: **07.10.2026**
(21) Application number: 25167874.4
(22) Date of filing: 01.04.2025
(51) Int. Cl.: G03F 1/70, G03F 7/00

(54) **METHOD FOR GENERATING SAMPLE DATA FOR DEVELOPING OR EVALUATING QUALITY INSPECTION METHODS OF PHOTOLITHOGRAPHY MASKS**

(71) Applicant: Carl Zeiss SMT GmbH, 73447 Oberkochen (DE)
(72) Inventor: FROEHLICH, Bjoern, 07745 Jena (DE); SAGER, Korbinian, 81379 München (DE); FREYTAG, Alexander, 07745 Jena (DE); BRAUER, Bjoern, 07745 Jena (DE); VARDANYAN, Valeri, 73447 Oberkochen (DE)
(74) Representative: Pfiz/Gauss Patentanwälte PartmbB

(57) **Abstract**

The invention relates to a computer implemented method for generating sample data, the method comprising: providing multiple mask models (24) of photolithography masks comprising structures (33); modifying the multiple mask models (24) of photolithography masks using a first machine learning model (28), wherein the first machine learning model (28) receives a mask model (24) of a photolithography mask (14) and a text (26) describing one or more desired modifications (38) and generates one or more modified mask models (34, 34') or images (36, 36') of the one or more modified mask models (34, 34'); generating sample data (40) comprising images (36, 36') of the multiple modified mask models (34, 34') of photolithography masks, wherein the sample data is configured for developing or evaluating a method for quality inspection of photolithography masks. The invention also relates to a corresponding training method and system.

## Description

### Field of the Invention

The invention relates to methods for generating sample data for training a machine learning model for quality inspection of photolithography masks and corresponding systems. The machine learning model can, for example, be trained to detect defects in images of photolithography masks or to take measurements from images of photolithography masks.

### Background of the Invention

Semiconductor manufacturing involves precise manipulation, e.g., etching, of materials such as silicon or oxide at very fine scales in the range of nm. A wafer made of a thin slice of silicon serves as the substrate for microelectronic devices containing semiconductor structures built in and upon the wafer. The semiconductor structures are constructed layer by layer using repeated processing steps that involve repeated chemical, mechanical, thermal and optical processes. Photolithography is a process used to produce patterns on the substrate. The patterns to be printed on the surface of the substrate are generated by computer-aided-design (CAD). From the design, for each layer a photolithography mask is generated, which contains a magnified image of the computer-generated pattern to be etched into the substrate. The photolithography mask can be further adapted, e.g., by means of optical proximity correction techniques. During the printing process an illuminated image projected from the photolithography mask is focused onto a photoresist thin film formed on the substrate. A semiconductor chip powering mobile phones or tablets comprises, for example, approximately between 80 and 120 patterned layers.

Due to the growing integration density in the semiconductor industry, photolithography masks have to image increasingly smaller structures onto wafers. The minimum design node can be below 10nm, for example 7nm or 5nm, and is approaching design node size below 3nm in near future, which corresponds to a feature size or critical dimension below 20nm on the wafer. While the complexity and dimensions of the semiconductor structures are growing into the 3^{rd} dimension, the lateral dimensions of integrated semiconductor structures are becoming smaller. Producing the small structure dimensions imaged onto the wafer requires photolithographic masks or templates for nanoimprint photolithography with ever smaller structures or pattern elements. The production process of photolithographic masks and templates for nanoimprint photolithography is, therefore, becoming increasingly more complex and, as a result, more time-consuming and ultimately also more expensive. With the advent of EUV photolithography scanners, the nature of masks changed from transmission-based to reflection-based patterning.

Due to the tiny structure sizes of the pattern elements of photolithographic masks, it is not possible to exclude errors during mask production. The resulting defects can, for example, arise from degeneration of photolithography masks or particle contamination. Hence, in semiconductor process control, photolithography mask inspection, review, and metrology play a crucial role to monitor systematic defects. Defects detected during quality control processes can be used for root cause analysis, for example, to modify, repair or even discard the photolithography mask.

During quality control, optical systems examine structures on photolithography masks using images. An image is formed by the projection of light, e.g. of EUV or DUV wavelength, through a photolithography mask onto an imaging sensor, e.g. CCD or CMOS arrays. The image, thus, represents the distribution of light on the surface of a wafer. For example, by registering structures in the image with corresponding structures in a reference image, positions of structures can be measured and defects can be detected on the photolithography mask. However, images of photolithography masks are huge and contain various structure combinations, optionally including optical proximity correction (OPC) structures or inverse lithography technology (ILT) patterns. Every relevant part of the photolithography mask has to be checked to prevent malfunctioning of the chip later on. Therefore, fast and highly accurate inspection processes are required that are often implemented using machine learning models. However, machine learning models require huge amounts of sample data, and their accuracy is limited by the accuracy of their sample data. In particular, realistic defective sample data is hard to obtain. Large amounts of sample data are also required for deriving parameters of quality inspection methods, or for evaluating the accuracy of quality inspection methods.

Therefore, it is an objective of this invention to generate realistic sample data for developing or evaluating quality inspection methods of photolithography masks.

The objectives are achieved by the invention specified in the independent claims. Advantageous embodiments and further developments of the invention are specified in the dependent claims.

### Summary of the invention

Embodiments of the invention concern methods, computer-readable media, computer program products and systems for generating sample data for training a machine learning model for quality inspection of photolithography masks.

A first embodiment involves a method for generating sample data, in particular for training a machine learning model, the method comprising: providing multiple mask models of photolithography masks comprising structures; modifying the multiple mask models of photolithography masks using a first machine learning model, wherein the first machine learning model receives a mask model of a photolithography mask and a text describing one or more desired modifications as input and generates one or more modified mask models or images of the one or more modified mask models as output; and generating sample data comprising images of the multiple modified mask models of photolithography masks, wherein the generated sample data is configured for developing or evaluating a method for quality inspection of photolithography masks.

The generated sample data can be configured for training a second machine learning model for quality inspection of photolithography masks. The generated sample data can be configured for determining parameters of a method for quality inspection of photolithography masks, or it can be configured for evaluating the quality or accuracy of a method for quality inspection of photolithography masks.

By using a machine learning model with text input for describing desired modifications of the mask model of the photolithography mask, modified mask models of photolithography masks can be generated automatically, quickly, in a targeted way and with large variability. Due to the high-level nature of a text description, a single text input can be used to generate various modifications of a single mask model. The more high-level the text description, the more variability can be automatically introduced into the mask model. In this way, the generation of a large variety of mask models is greatly simplified.

The desired modifications can comprise the introduction of defects in structures of the mask model of the photolithography mask, transformations of structures of the mask model of the photolithography mask, the introduction of structures generated by a third machine learning model into the mask model of the photolithography mask or the integration of contour variations into the mask model of the photolithography mask. In this way, sample data for optical inspection systems or optical metrology systems can be generated using the same framework.

In an example, the desired modifications comprise one or more contour variations of one or more structures of the mask model, wherein the first machine learning model is trained to map a contour section of a structure of a mask model and one or more contour variations to further contour points of the contour section, in particular to a closed contour, representing a structure of a modified mask model.

In an example, the first machine learning model further receives a region indicator indicating regions, where the mask model of the photolithography mask may be modified.

According to an example, the first machine learning model receives two or multiple mask models of photolithography masks and a text describing one or more desired modifications as input.

In an example, the first machine learning model comprises a conditional generative machine learning model that uses the mask model and the text as conditional input and that is trained to generate one or more modified mask models or images of the one or more modified mask models.

According to an aspect, the first machine learning model comprises a large language model or a diffusion model, in particular a conditional diffusion model or a latent conditional diffusion model.

In an example, the sample data further comprises images of the multiple provided mask models of photolithography masks and/or labels indicating the modified locations in the mask model of the photolithography mask.

According to an aspect, the sample data comprises pairs of input images and reference images, each input image being an image of a modified mask model of a photolithography mask and each reference image being an image of the corresponding provided mask model of the photolithography mask.

According to an embodiment of the invention, the generated sample data is configured for training a second machine learning model for detecting defects in images of photolithography masks, wherein the sample data comprises pairs of input images and reference images, each input image being an image of a modified mask model of a photolithography mask and each reference image being an image of the corresponding provided mask model of the photolithography mask. Optionally, labels describe the introduced defects in the modified mask model of the photolithography mask.

According to an embodiment of the invention, the generated sample data is configured for training a second machine learning model for measuring deviations of structures in images from corresponding structures in reference images, wherein the sample data comprises pairs of input images and reference images, each input image being an image of a modified mask model of a photolithography mask and each reference image being an image of the corresponding provided mask model of the photolithography mask. Optionally, labels describe the transformations of structures in the modified mask model.

According to an example, an image of a mask model of a photolithography mask in the sample data is obtained using a simulation method that simulates an acquired image from a mask model of a photolithography mask, or by acquiring an image of a photolithography mask manufactured for the mask model.

In a preferred example, the generated sample data is configured for training a second machine learning model for quality inspection of photolithography masks.

In a preferred example, the generated sample data is used for training a second machine learning model for quality inspection of photolithography masks.

A computer implemented method for training a machine learning model for quality inspection of a photolithography mask according to an embodiment of the invention comprises: generating sample data for training the machine learning model according to any one of the preceding claims; and training the machine learning model by modifying parameters of the machine learning model by optimizing a loss function using sample data comprising the generated sample data.

According to an embodiment, a computer program comprises instructions which, when the program is executed by a computer, cause the computer to carry out a method for generating sample data for a machine learning model according to any of the embodiments, examples or aspects described above.

According to an embodiment, a computer-readable medium has a stored computer program executable by a computing device, the computer program comprising code for executing a method for generating sample data for a machine learning model according to any of the embodiments, examples or aspects described above.

A system for generating sample data for training a machine learning model according to an embodiment of the invention comprises: one or more processing devices; one or more machine-readable hardware storage devices comprising instructions that are executable by one or more processing devices to perform operations comprising a method for generating sample data for training a machine learning model according to any of the embodiments, examples or aspects described above.

While the examples and embodiments of the invention are described with respect to semiconductor wafers, it is understood that the invention is not limited to semiconductor wafers, but can for example also be applied to reticles or masks for semiconductor fabrication or to other manufactured objects.

The invention described by examples and embodiments is not limited to the embodiments and examples but can be implemented by those skilled in the art by various combinations or modifications thereof.

### Brief Description of the Drawings

- Fig. 1: illustrates an exemplary transmission-based optical system, e.g., a deep ultraviolet (DUV) optical system;
- Fig. 2: illustrates an exemplary reflection-based optical system, e.g., an extreme ultra-violet light (EUV) optical system;
- Fig. 3: shows a flowchart of a method for generating sample data according to an embodiment of the invention;
- Fig. 4: illustrates the input and output of a first machine learning model for generating sample data;
- Fig. 5: illustrates the training of a second machine learning model for quality inspection of photolithography masks using sample data generated by the first machine learning model in Fig. 4;
- Fig. 6a-f: show various modifications of mask models of photolithography masks;
- Fig. 7a: illustrates an exemplary implementation of an attention mechanism in a machine learning model;
- Fig. 7b: illustrates a Transformer block comprising multiple attention mechanisms;
- Fig. 8: illustrates a large language model that receives a text describing a mask model of a photolithography mask and a text describing the modifications to be carried out in the mask model and generates a modified mask model of the photolithography mask;
- Fig. 9: illustrates a modification of a mask model by integrating contour variations into a contour section of a mask model;
- Fig. 10a-c: illustrate the sample data generation, a conditional diffusion model and a latent conditional diffusion model for photolithography mask model modification;
- Fig. 11: illustrates a latent conditional diffusion model, the reverse stochastic process step being implemented using an image-to-image neural network;
- Fig. 12: illustrates the modification of a mask model of a photolithography mask using a conditional diffusion model for inpainting;
- Fig. 13: shows a stable diffusion model for modifying mask models of photolithography masks with modified encoders for encoding multiple conditions comprising images and text;
- Fig. 14: shows modified mask models generated by the stable diffusion model in Fig. 13; and
- Fig. 15: shows a system for generating sample data according to an embodiment of the invention.

### Detailed Description

In the following, advantageous exemplary embodiments of the invention are described and schematically shown in the figures. Throughout the figures and the description, same reference numbers are used to describe same features or components. Dashed lines indicate optional features.

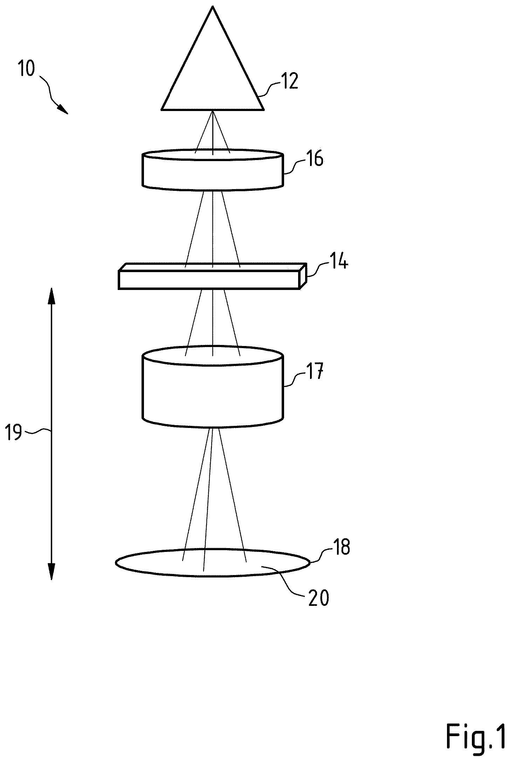

Fig. 1 illustrates an exemplary transmission-based optical system 10 for measuring structures on photolithography masks using DUV light. Major components are a light source 12, which may be a deep-ultraviolet (DUV) excimer laser source, imaging optics which, for example, define the partial coherence and which may include optics that shape radiation from the light source 12, a photolithography mask 14, illumination optics 16 that illuminate the photolithography mask 14 and projection optics 17 that project an image of the photolithography mask onto a wafer plane 18. An adjustable filter or aperture at the pupil plane of the projection optics 17 may restrict the range of beam angles that impinge on the wafer plane 18, where the largest possible angle defines the numerical aperture of the projection optics *NA* = *n sin*(θ*ₘₐₓ*), wherein n is the refractive index of the media between the substrate and the last element of the projection optics 17, and *θₘₐₓ* is the largest angle of the beam exiting from the projection optics 17 that can still impinge on the wafer plane 18. The radiation distribution at the wafer plane 18 is imaged by an image sensor 20 of a camera, e.g., a CCD or CMOS sensor, to generate an image that is used for measuring tasks.

In the present document, the terms "illumination", "radiation" or "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 3-100 nm).

Illumination optics 16 may include optical components for shaping, adjusting and/or projecting radiation from the light source 12 before the radiation passes the photolithography mask 14. Projection optics 17 may include optical components for shaping, adjusting and/or projecting the radiation after the radiation passes the photolithography mask 14. The illumination optics 16 exclude the light source 12, the projection optics exclude the photolithography mask 14.

Illumination optics 16 and projection optics 17 may comprise various types of optics, including refractive optics, reflective optics, apertures and catadioptric optics, for example. Illumination optics 16 and projection optics 17 may also include components operating according to any of these design types for directing, shaping or controlling the projection beam of radiation, collectively or singularly.

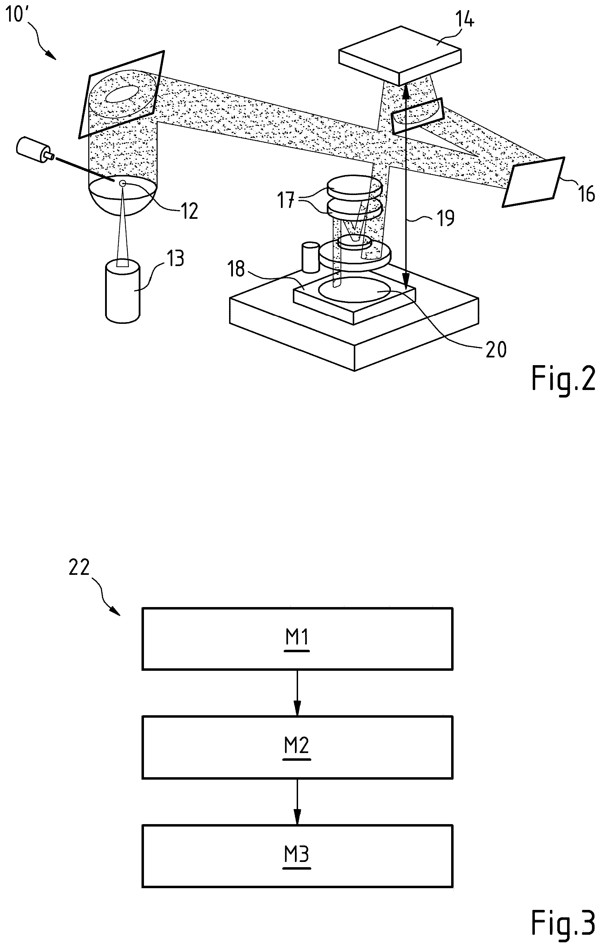

Fig. 2 illustrates an exemplary reflection-based optical system 10' for measuring structures on photolithography masks using extreme ultraviolet (EUV) light. Major components are a light source 12 in the form of an EUV plasma source that is ignited by an IR-laser 13, illumination optics 16 which, for example, define the partial coherence and which may include optics that shape radiation from the light source 12, a photolithography mask 14, and projection optics 17 that project an image of the photolithography mask onto a wafer plane 18. An adjustable filter or aperture at the pupil plane of the projection optics 17 may restrict the range of beam angles that impinge on the wafer plane 18, where the largest possible angle defines the numerical aperture of the projection optics *NA* = *n sin*(θ*ₘₐₓ*), wherein n is the refractive index of the media between the substrate and the last element of the projection optics 17, and *θₘₐₓ* is the largest angle of the beam exiting from the projection optics 17 that can still impinge on the wafer plane 18. The radiation distribution at the wafer plane 18 is imaged by an image sensor 20 of a camera to generate an image.

An optical system 10, 10' such as the ones shown in Fig. 1 and 2 can be used to generate an image of the photolithography mask that is used for quality inspection of a photolithography mask.

An optical system refers to a system that uses light to obtain an image of a photolithography mask. It illuminates the photolithography mask with light from an illumination source and projects the reflected or transmitted light from the photolithography mask surface to a camera sensor array. Optical systems comprise, for example, optical inspection systems, optical mask qualification systems, and optical metrology systems. These are used for quality inspection of photolithography masks.

An optical inspection system refers to an optical system used to detect defects in a photolithography mask by acquiring and analyzing images of the photolithography mask or one or more sections thereof. In particular, inspection systems comprise actinic photomask inspection systems

An optical mask qualification system refers to a system that is used to acquire an image of a portion of a photolithography mask, thereby emulating settings of a photolithography system, e.g. illumination and imaging parameters. The acquired image is of a higher quality than an image acquired by an optical inspection system, e.g., of a reduced noise level. The portions of the photolithography mask can comprise potential defect locations detected using an optical inspection system for further review. The acquired image can be used to examine the effect of a potential defect on a printed wafer, to verify that photolithography masks are defect-free, whether a repair attempt has been successful or for critical dimension estimation.

An optical metrology system refers to a system that is used to take measurements of structures in a photolithography mask by acquiring an image of the photolithography mask.

The photolithography mask may have an aspect ratio of between 1:1 and 1:4, preferably between 1:1 and 1:2, most preferably of 1:1 or 1:2. The photolithography mask may have a nearly rectangular shape. The photolithography mask may be preferably 5 to 7 inches long and wide, most preferably 6 inches long and wide. Alternatively, the photolithography mask may be 5 to 7 inches long and 10 to 14 inches wide, preferably 6 inches long and 12 inches wide.

A structure in a mask model refers to a component of the photolithography mask, e.g., absorber structures, channels, contact structures, conductors, word lines, deck transitions, bit lines, source lines, gates, etc.

An image of a photolithography mask can refer to different kinds of images of the photolithography mask, e.g., to a two-dimensional image, a three-dimensional image, a stack of images or a volumetric three-dimensional image that can, for example, be processed slice by slice. An image can be an image of a complete photolithography mask or of a section of the photolithography mask.

According to an example, an image refers to an aerial image. An aerial image indicates the radiation intensity distribution of an optical system in a wafer plane for a given photolithography mask. It refers to the image that is formed by the projection of light, e.g. of EUV or DUV wavelength, through a photolithography mask onto an imaging sensor, e.g. CCD or CMOS arrays. The aerial image, thus, simulates the structures on the surface of a wafer after printing. A wafer plane refers to a plane within the resist on top of the wafer. The imaging sensor can be part of a camera adapted for acquiring images at predetermined wavelengths. The camera can be an EUV camera, and/or a camera comprising a TDI sensor. In preferred embodiments, an image acquisition method comprises the use of an EUV camera comprising a TDI sensor. The camera's image sensor can accordingly be an EUV image sensor, i.e., an image sensor that is sensitive to EUV light. EUV light is light in the extreme ultraviolet spectral range with wavelengths between 5 nm and 100 nm, in particular with wavelengths between 5 nm and 30 nm. Especially the EUV light can have a wavelength of 13.5 nm. In preferred embodiments, the image acquisition method comprises illuminating a photolithography mask with actinic radiation within the EUV wavelength range. EUV radiation reflected from the mask is then projected on an imaging sensor of an EUV camera via accordingly adapted projection optics.

In order to quickly process large amounts of data, machine learning methods can be used. Machine learning is a field of artificial intelligence. Machine learning methods generally build a parametric machine learning model based on sample data consisting of a large number of samples. During training, the parameters of the machine learning model are optimized by minimizing an application-specific objective function (loss function). After training, the model is able to generalize the knowledge gained from the sample data to new previously unencountered samples, thereby making predictions for new data. There are many machine learning methods, e.g., linear regression, k-means, support vector machines, decision trees, random forests or deep learning approaches. Machine learning models are parametric models whose parameters are optimized during training. The machine learning model and the learned parameters can be applied to make predictions for new input data. Machine learning models comprise, for example, neural networks, diffusion models, transformers, support vector machines, decision trees, random forests, subspaces, cluster sets, etc.

Deep learning is a class of machine learning that uses artificial neural networks with numerous hidden layers between the input layer and the output layer. Due to this complex internal structure the networks are able to progressively extract higher-level features from the raw input data. Each level learns to transform its input data into a slightly more abstract and composite representation, thus deriving low and high level knowledge from the sample data. The hidden layers can have differing sizes and tasks such as convolutional or pooling layers.

Machine learning models are trained using sample data, i.e., examples, and, thus, independently derive their knowledge from the sample data instead of requiring a user to define rules to obtain the desired results. In this way, optimal results with respect to the minimized loss function can be obtained automatically in a data-driven way. Thus, the use of machine learning methods increases the recall and precision of the method and reduces the required user effort.

According to a first embodiment of the invention illustrated in Fig. 3, a computer implemented method 22 for generating sample data, in particular for training a machine learning model, comprises: providing multiple mask models of photolithography masks comprising structures in a step M1; modifying the multiple mask models of photolithography masks using a first machine learning model, wherein the first machine learning model receives a mask model of a photolithography mask and a text describing one or more desired modifications as input and generates one or more modified mask models or images of the one or more modified mask models as output in a step M2; and generating sample data comprising images of the multiple modified mask models of photolithography masks, wherein the generated sample data is configured for developing or evaluating a method for quality inspection of photolithography masks in a step M3. The generated sample data may, for example, be configured for training a second machine learning model for quality inspection of photolithography masks in step M3.

By using a machine learning model for generating sample data, large amounts of sample data can be generated automatically and quickly. Furthermore, the machine learning model allows to automatically introduce various modifications (e.g. shapes, locations, patterns, etc.) and combinations of modifications into the sample data. By using text as input to describe desired modifications, the modifications can be described in a high-level manner very easily and flexibly. At the same time the high-level text can be used to generate a multitude of modifications of a mask model without having to specify each of them separately. Text input even enables non-experts to use the machine learning model to generate sample data. In addition, text input allows to leverage powerful pre-trained machine learning models such as large language models and diffusion models for generating sample data.

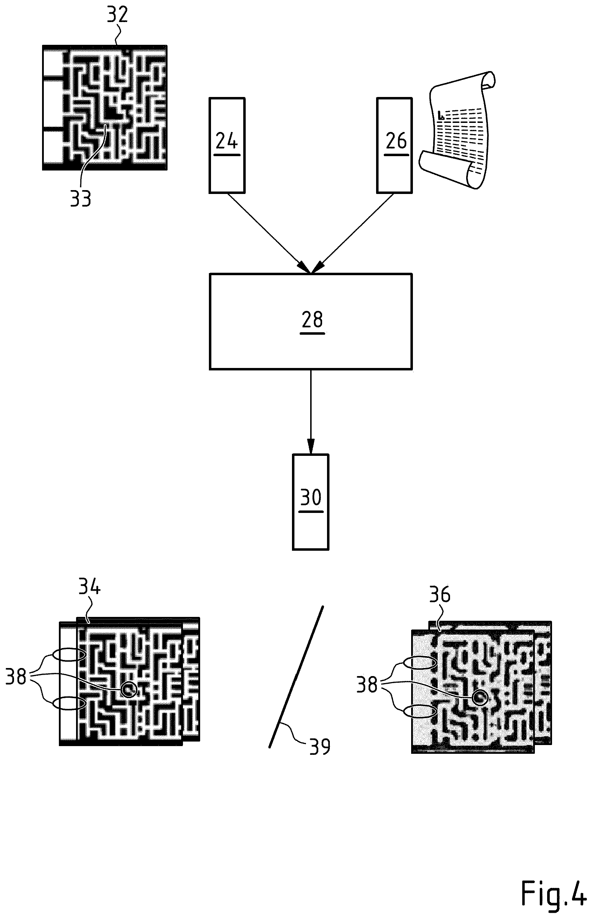

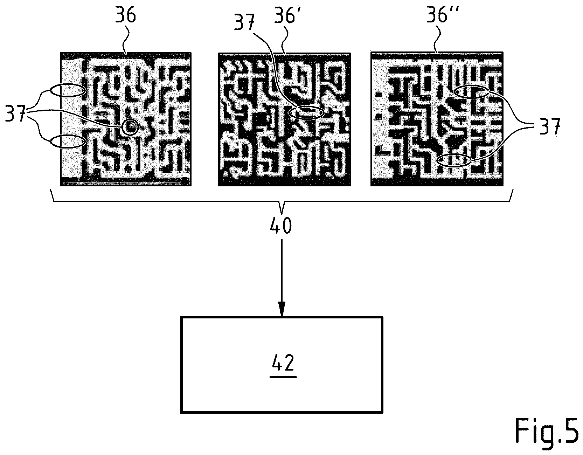

The method 22 for generating sample data is illustrated in Fig. 4. The input of the first machine learning model 28 is a mask model 24 of a photolithography mask, e.g., in the form of a binary image 32 comprising structures 33, and a text 26. The output 30 of the first machine learning model 28 are one or more modified mask models 34 of the photolithography mask. Alternatively, the first machine learning model 28 can directly output one or more images 36 of the one or more modified mask models 34 of the photolithography mask. Optionally, the output 30 comprises labels indicating the modifications 38 of the mask model 24 of the photolithography mask. These labels can be used for training a second machine learning model for quality inspection, but they are not mandatory. As illustrated in Fig. 5, images 36, 36', 36" of the modified mask models 34 of photolithography masks, optionally together with labels 37 indicating the modifications 38 in the modified mask models, are used as sample data 40 for developing or evaluating a method for quality inspection of photolithography masks, in particular for training a second machine learning model 42 for quality inspection of photolithography masks.

A mask model of a photolithography mask refers to a representation of the photolithography mask or a section thereof. The mask model can, for example, comprise a computer readable file, such as a CAD file, a TCAD file, a GDS file, an Oasis file, or a technical drawing. A mask model of a photolithography mask can comprise descriptions of structures or patterns on the photolithography mask, e.g., of their location and shape. For example, the structures on the photolithography mask, in particular curvilinear structures, can be described as mathematical functions, e.g., in the form of vertices, edges, polygons, curves, contours, Splines, NURBS, Bézier curves, etc. The shape of structures can further be described using properties such as side wall angles or corner rounding, etc. The patterns and structures on a photolithography mask can also be described by an image, e.g., a 2D image or a 3D image (e.g., a volume of voxels or a number of 2D slices of a volume), that represents structures or patterns on the photolithography mask. The image can comprise image elements, e.g., pixels or voxels. The image can, for example, be a binary image indicating the location of structures on the photolithography mask. Grey-scale images could be used to indicate, for example, probabilistic models of photolithography masks, where the intensity corresponds to the probability of a structure. The image can contain one, two or more channels. The channels can also comprise further information of the photolithography mask such as material properties. The image can also be an acquired image of a photolithography mask, e.g., a structured electron microscopy image, an aerial image or an image acquired by a camera, or a simulated image, e.g., a simulated aerial image. The image can be processed further, e.g. using edge detection or contour extraction. The patterns and structures on a photolithography mask can also be described using text, e.g., describing locations of structures such as the location of absorber structures or the order of layers in a multilayer, parameters of functions representing (curvilinear) structures, types of structures or patterns such as "lines and spaces", "contact hole", "lines", "dots", "squares", "crosses", "letter Z", "spline", "semicircle", or high-level descriptions such as "regular arrangement of lines with a specific distance", etc. Apart from the location and shape of structures on the photolithography mask, the mask model can comprise further properties of the photolithography mask, e.g., material properties of the structures on the photolithography mask such as complex refractive indices of materials contained in the photolithography mask, electric permittivities, magnetic permeabilities, or derived representations. The mask model can also comprise size or dimensional properties of the photolithography mask such as the thicknesses of layers in a multilayer of an EUV mask or the thickness of other layers, or the dimension of structures. A mask model of a photolithography mask can comprise optical proximity correction or inverse lithography based patterns. A mask model can refer to the mask model of a complete photolithography mask, or it can refer to the mask model of a section of the photolithography mask. A mask model of a photolithography mask can, for example, be stored in a database.

The first machine learning model 28 can generate a single modified mask model 34 from a mask model 24 of a photolithography mask or multiple modified mask models 34 with different modifications. The first machine learning model 28 can, either, directly output images 36 of modified mask models 34 of photolithography masks, or the images are generated subsequently from the modified mask models 34 using simulation techniques described in the following.

To generate an image 36, 36', 36" of a photolithography mask from a modified mask model 34 of a photolithography mask, a simulation method can be applied to the modified mask model 34 of the photolithography mask. The simulation method simulates the imaging process of an optical system, in particular of an inspection system, an optical mask qualification system or a metrology system, that is used to obtain images of photolithography masks that are subsequently inspected by the method for quality inspection to be developed or evaluated, in particular by a second machine learning model 42 for quality inspection.

An aerial image of a photolithography mask can, for example, be simulated from a modified mask model of a photolithography mask in different ways. An aerial image simulation method can comprise the use of a physical model for simulating the incidence of light in the form of electromagnetic waves on a photolithography mask represented by a modified mask model within an optical system. This leads to accurate simulations of aerial images but is often time-consuming. Among these methods, there are rigorous simulation methods such as finite difference time domain (FDTD) or rigorous coupled wave analysis (RCWA) that are known to a person skilled in the art. Since they require long computation times, fast approximations such as the thin element approximation (TEA) can be used. The thin element approximation (TEA) assumes that the thickness of the structures on the photolithography mask is very small compared to the wavelength of the light, and that the widths of the structures on the photolithography mask are very large compared to the wavelength. However, as photolithographic processes use radiation of shorter and shorter wavelengths, and the structures on the patterning device become smaller and smaller and grow into the vertical dimension, these assumptions do not hold anymore, and mask 3D effects such as shadowing, phase effects or double images, must be taken into account. Therefore, the results of the TEA method are less accurate but much faster to obtain than rigorous simulation results. To obtain fast and accurate results, simulation methods that are based on physical models but still do not rely on the thin mask assumption can be used, e.g., the one disclosed in PCT application No. WO 2024 141484 A1 or in German patent application No. DE 10 2022 135019 A1.

An image of a mask model of a photolithography mask can also be acquired from a manufactured photolithography mask for the mask model. Thus, from the mask model a photolithography mask is manufactured, e.g., printed using a photolithography system, and an image is acquired from the manufactured photolithography mask, e.g., an aerial image. In this way, highly realistic images can be generated from mask models to obtain highly realistic sample data. At least a portion of the sample data may be generated in this way to obtain realistic sample data.

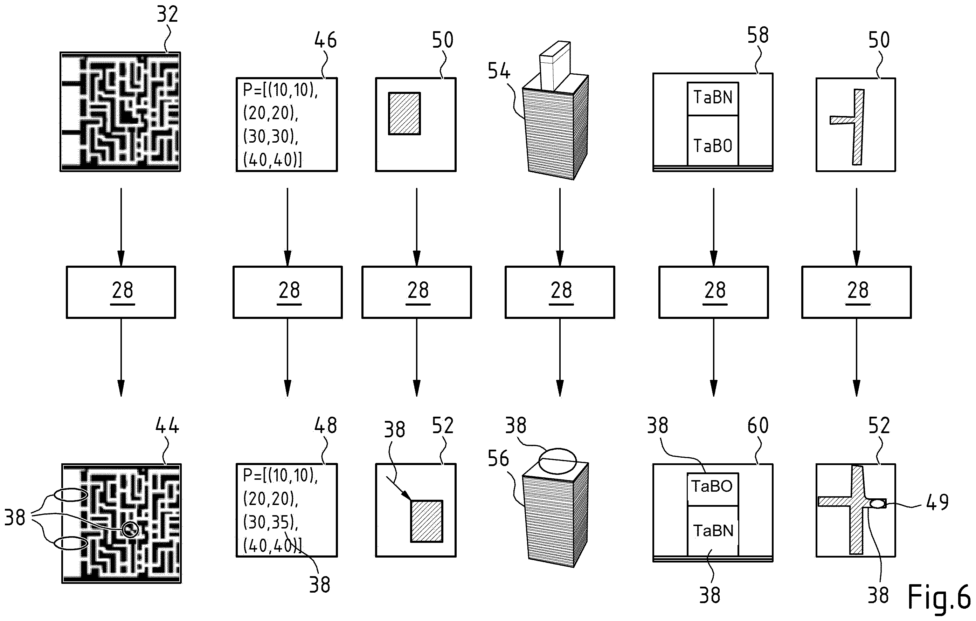

There are various representations and modifications of a mask model of a photolithography mask that are illustrated in Fig. 6a-f and described in the following.

A mask model may be represented as an image (2D or 3D), a text, one or more geometric shapes, one or more contours, etc.

A modification of a mask model of a photolithography mask refers to any kind of modification, e.g., an introduced defect, an introduced structure, a removed structure, a modified shape of a structure (e.g., rounded edges, line edge roughness, bridging, etc.), a modification of a semiconductor path, a modification of a type of structure, a modification of a location of a structure (e.g. by a transformation) a modification of properties such as material, electric permittivity, magnetic permeability, etc. A modified mask model of a photolithography mask can comprise one or more modifications of the same type or of different types, e.g., the introduction of a defect and the modification of a material, or the introduction of a defect and the modification of semiconductor paths, etc.

Fig. 6a shows a mask model 24 of a photolithography mask in the form of a binary image 32 that is used as input to the first machine learning model 28 for generating sample data, resulting in a modified binary image 44, e.g., with introduced defects, optionally with labels indicating the modifications 38.

Fig. 6b shows a mask model 24 of a photolithography mask in the form of a text 46 describing locations of structures such as polygons on the photolithography mask that is used as input to the first machine learning model 28 for generating sample data, resulting in a modified text 48, optionally with labels indicating the modifications 38.

Fig. 6c shows a mask model 24 of a photolithography mask in the form of a CAD file 50 describing a structure on a photolithography mask that is used as input to the first machine learning model 28 for generating sample data, resulting in a modified CAD file 52 with a transformed structure, optionally with labels indicating the transformation 38.

Fig. 6d shows a mask model 24 of a photolithography mask in the form of a 3D image 54 describing layers such as a multilayer on the photolithography mask that is used as input to the first machine learning model 28 for generating sample data, resulting in a modified 3D image 56, optionally with labels indicating the modifications 38.

Fig. 6e shows a mask model 24 of a photolithography mask in the form of an image 58 comprising material properties that is used as input to the first machine learning model 28 for generating sample data, resulting in an image comprising modified material properties 60, optionally with labels indicating the modified material properties 38.

Fig. 6f shows a mask model 24 of a photolithography mask in the form of a CAD file 50 describing a structure on a photolithography mask and a contour variation 49 that are used as input to the first machine learning model 28 for generating sample data, resulting in a modified CAD file 52, where the contour variation 49 is integrated into the structure of the mask model 24.

The desired modifications can also comprise structures to be added to or removed from a mask model of a photolithography mask. The structures to be added or removed can be indicated using coordinates, or they can be described semantically, e.g., using their type ("remove all contact holes", "add a contact hole at position X") or their size ("remove all structures with an area below a threshold"), etc., or they can be described using a user interface, e.g., using user indications such as mouse clicks or strokes, etc. The user indications can be used to indicate a location and/or to select a structure or a type of structure to add or remove, etc.

A mask model 24 of a photolithography mask can be modified using a single, two or multiple modifications simultaneously. The modifications can be of the same type or of different types, e.g., a transformation of a structure and an introduced defect. Two or more modifications can even refer to the same structure, e.g., an introduced and transformed defect.

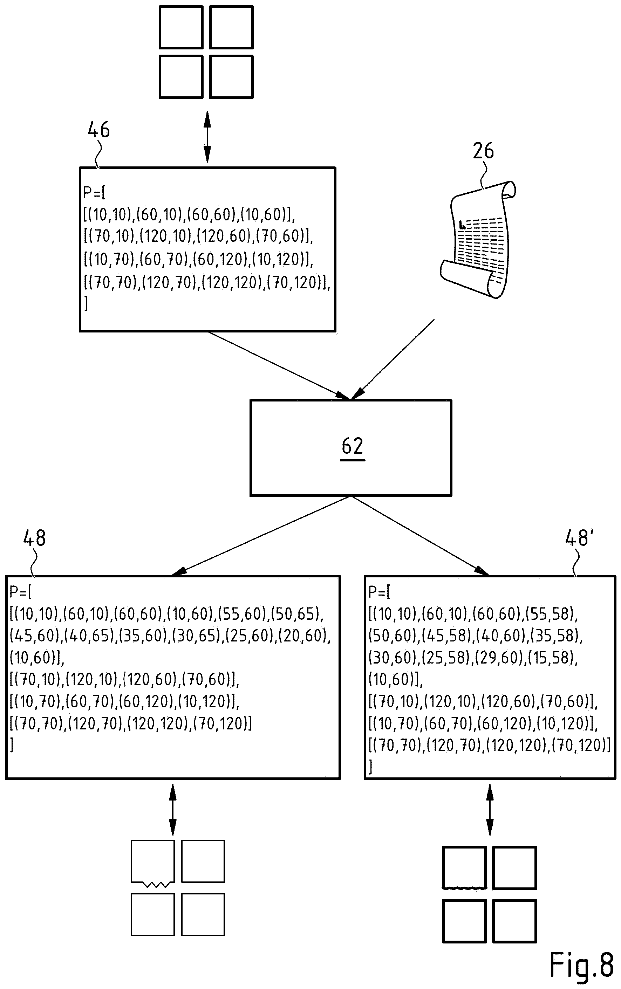

A modification can be introduced into a mask model of a photolithography mask in different ways. In an example, the modification can be described using the text that is interpreted by the first machine learning model to generate the modification. By using a text as input to the first machine learning model, the modifications can be described in a high-level way that gives the first machine learning model the freedom to implement the text specification in different ways (see also Fig. 8).

In another example, a third machine learning model is used to generate modified structures, in particular defective structures, that are introduced into a mask model of a photolithography mask. For example, a predefined catalogue of modifications, in particular of defects, can be provided, and modifications can be generated from this catalogue and introduced into a mask model of a photolithography mask. The text input of the first machine learning model, in this case, can provide information about the catalogue and/or the location in the mask model, where the modification should be introduced, etc. Such a catalogue can, for example, be defined by a user, or it can be derived from sample data. To this end, a third machine learning model such as subspace model (e.g., principal component analysis (PCA), independent component analysis (ICA), non-negative matrix factorization (NMF), etc.) can be used. Various patches comprising modifications, in particular defects, can be used as input data, and the subspace model generates a subspace of the input data according to different criteria, e.g., according to maximal variance of the input data along the subspace dimensions (PCA) or according to maximal statistical independence of the subspace dimensions (ICA). A probability distribution can then be fitted to the input data projections in the subspace, e.g., a parametric or non-parametric distribution, for example a Gaussian, a Gaussian mixture model, a Parzen density, etc. From the probability distribution, new representative samples can be drawn and inserted into mask models of photolithography masks, e.g., via inpainting as described below.

Instead of a predefined catalogue of modifications, modifications can be designed using a third machine learning model in the form of sampling from a Gaussian process, e.g., by sampling deviations Δx, Δy from the coordinates x, y of a polygon using a Gaussian process, for example with a minimum kernel comprising the sum over the minima in each dimension ${K}_{min} \left({x}_{1}, {x}_{2}\right) = {\sum }_{d = 1}^{D} min \left(x1\left(d\right),x2\left(d\right)\right) .$

In this way, realistic-looking deviations from smooth lines can be generated and introduced into a mask model of a photolithography mask by inpainting. In this case, the text input to the first machine learning model can provide information about the Gaussian process and/or the location, where the modification should be introduced into the mask model.

By using a third machine learning model for generating modifications of structures, realistically looking modifications are generated from sample data quickly, automatically and with high quality due to the use of machine learning techniques.

The modifications of the mask model can lead to a defective mask model of the photolithography mask or to a new mask model of the photolithography mask. Defective mask models are important for developing or evaluating methods for quality inspection of photolithography masks, in particular for training second machine learning models for quality inspection, since defects are very rare in acquired images of photolithography masks. By using images of defective mask models, the problem of class imbalance can be alleviated. Apart from defective mask models, new mask models with various arrangements and shapes of structures are important for training as well to increase the variety of sample data samples. Preferably, the method for quality inspection, in particular a second machine learning model for quality inspection, is developed or evaluated using both, defective mask models to reduce class imbalance and new mask models to have sufficient and variable sample data. The second machine learning model for quality inspection can be trained using only the generated sample data. Preferably, the sample data of the second machine learning model for quality inspection comprises "real" acquired images and generated sample data.

Labels can be generated from a mask model of a photolithography mask and a modified mask model of the photolithography mask in different ways, also depending on the representation of the mask model of the photolithography mask. In case the mask model is represented as an image, labels can be generated from the difference image of the mask model and the modified mask model. Thus, the difference image is only non-zero in regions, where the mask model was modified. Labels can also be generated in the form of text files that indicate locations of modifications, e.g., in the form of coordinates or material property changes.

According to an example, the first machine learning model further receives a region indicator indicating regions (regions of interest), where the mask model of the photolithography mask may be modified. This region indicator can be provided in different ways, e.g., as an (potentially binary) image, a text, a sequence of coordinates of a shape such as a polygon or circle, etc. It can indicate specific regions, or it can describe regions in a high-level way, e.g., "regions around contact holes" (important for overlays), "regions with a high structure-density", "regions comprising structures with a low distance", etc. The region indicator can also indicate regions, where modifications are not allowed. The region indicator can be specified depending on the process requirements. It can also be specified by a user or randomly, e.g., according to a specified area coverage. In this way, the sample data generation can be controlled, and the computation time can be reduced.

There are various types of machine learning models that can be used for generating sample data.

In particular, the first machine learning model comprises a conditional generative machine learning model that uses the mask model and the text as conditional input and that is trained to generate one or more modified mask models or images of the one or more modified mask models.

A generative machine learning model learns the underlying probability distribution of a training dataset, enabling it to generate new, similar data samples. Instead of simply mapping inputs to outputs as discriminative models do, generative models capture the joint probability distribution of the observed data, which allows them to synthesize new examples that resemble the training data. Examples of generative models include generative Adversarial Networks (GANs) that consist of two competing networks-a generator that produces new data samples and a discriminator that evaluates their authenticity, Variational Autoencoders (VAEs) that encode data into a latent space and then decode from that space to generate new samples, autoregressive models such as PixelRNN or PixelCNN, which generate data one element at a time by modeling the conditional distribution of each element given previous ones, diffusion models that work by learning to reverse a diffusion process-where data is gradually corrupted with noise-and then reconstruct the original data from this noisy version, and large language models (LLMs) that are designed to generate coherent and contextually relevant text based on input prompts. Conditional generative machine learning models use one or more conditional inputs to guide the sample generation process. Thus, they capture the conditional probability distribution of the observed data given the one or more conditional inputs. In this way, new samples can be generated in a targeted way.

In a first example, the first machine learning model comprises a (large) language model. A language model is a type of machine learning model for natural language processing tasks. A large language model (LLM) is a language model with many parameters trained using self-supervised learning on large amounts of text. The largest and most powerful LLMs are generative pretrained transformers (GPTs). Transformers are machine learning models comprising attention mechanisms.

Attention mechanisms in deep learning are used to help the model focus on the most relevant parts of an input when making a prediction. In many problems, the input may be very large and complex, and it can be difficult for the model to process all of it. Therefore, attention mechanisms allow the model to selectively focus on the parts of the input that are most important for making a prediction, and to ignore the less relevant parts. This can help the model to make more accurate predictions and to run more efficiently at reduced computation time. As an example, attention mechanisms can be used to analyze text data or audio data (which is sequential), image data (which is spatially ordered as a 2D matrix or 3D matrix), or graph data (which is spatially un-ordered).

The attention mechanism helps preserve the context of every section in an input by assigning an attention weight relative to many or even to all other sections. This way, even if the input is large, the model can preserve the contextual importance of each section.

To recognize relationships between parts of the input data, the attention mechanism can transform an element of the input data into a new representation, thereby making use of one or more other elements of the input data and their similarity to the element. The transformation can comprise a similarity function and an aggregation function, wherein the similarity function assesses the similarity of an element to one or more other elements in the input data, and the aggregation function maps the element and the one or more other elements and their similarities to the new representation of the element. The aggregation function can generate the new representation of the element using a weighted combination of the one or more other elements in the input data, wherein the weights depend on the similarities of the element to the one or more other elements. An attention mechanism can have at least one trainable parameter, preferably for pre-processing elements of the input data such that the similarity function is applied to the pre-processed elements. The at least one trainable parameter can define at least one projection matrix which is used to pre-process the elements of the input data. Throughout the aforementioned definition of the term "attention mechanism", instead of elements of the input data, representations of the elements of the input data can be processed.

In contrast to convolutional layers or fully-connected layers, e.g., in CNNs, the weights applied to the elements of the input data depend on the input data, more precisely on the similarity of each element to the other elements of the input data, instead of being fixed after training. Furthermore, in contrast to convolutional operations, the attention mechanism does not require a fixed sequence of the elements in the input data. Instead, context windows of dynamic or global size can be implemented instead of using context windows of fixed size as in case of convolutions. Finally, in contrast to fully-connected layers, the attention mechanism does not require a fixed number of elements in the input data but can be applied to input data sets of arbitrary size. An attention mechanism can, thus, be understood as a location-dependent convolution with input data dependent weights and a context window of arbitrary size. For example, the context window can comprise the complete input data.

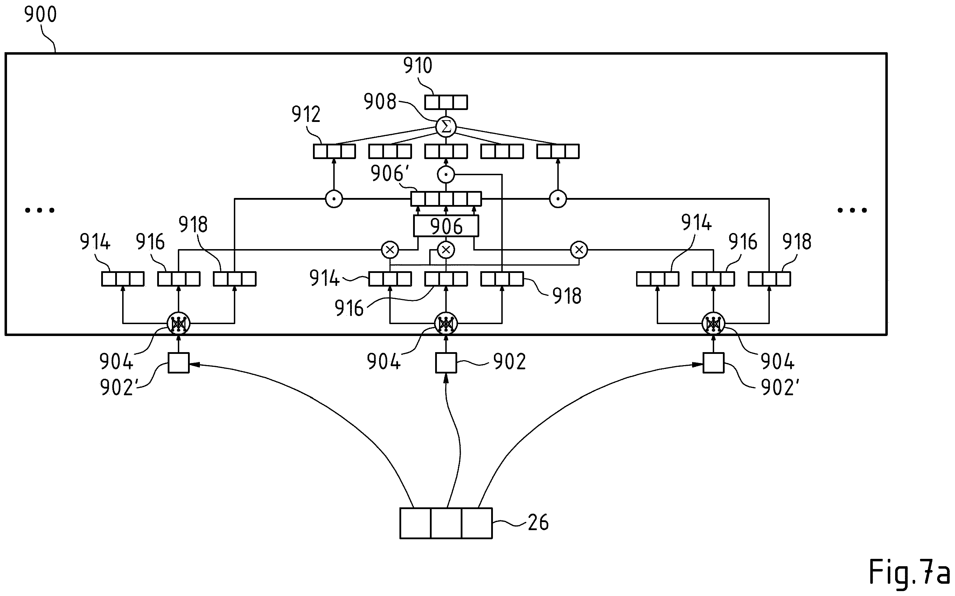

Fig. 7a illustrates an exemplary implementation of an attention mechanism in a machine learning model, in particular a LLM. Attention mechanisms 900 can be configured as a specific kind of neural network layer that can be added to deep learning models. They allow the model to focus on specific parts of the input by assigning different weights to different parts of the input. This weighting is typically based on the relevance of each part of the input to the task at hand. The attention mechanism transforms a token 902 of an input, e.g., an input text 26, to an attention-based representation 910 of the token 902 using contextual information 902'.

The attention mechanism 900 processes individual parts (called "token" 902) of the input, e.g., an input text 26. For example, tokens 902 can be words, sub-words, or characters as part of a text, patches or pixels as part of an image or derived representations or image features. The processing of each token 902 considers local or global context, possibly even the entire input, or context from a second data source. This contrasts with, e.g., convolutional filters in CNNs, which always focus on local context only. The "amount of" context which is considered and the processing operations for this consideration depend both on the current token 902. This also contrasts with convolution filters in CNNs, which have fixed size and fixed weights (i.e., fixed operations for each local structure) after being trained.

During the processing, the attention mechanism 900 transforms a representation in the form of a feature vector of a token 902 into an attention-based representation 910 while considering local or global context 902'. The attention-based representation is an aggregation of values derived from multiple tokens 902, 902', weighted by the result of a comparison between these tokens 902' and the token 902 currently being processed, or between derived feature vectors or further derived representations.

Attention mechanisms 900 comprise self-attention mechanisms and cross-attention mechanisms. Self-attention mechanisms transform the input to a new representation of the input called attention-based representation 910, thereby paying attention to different sections of the input itself. Cross-attention mechanisms transform the input into the new representation called attention-based representation 910 by paying attention to another data source. For example, the other data source can be a reference image that is paid attention to while consecutively transforming each subimage of an image, or the other data source can be a sentence in a third language that is paid attention to while consecutively translating each of the words of a first language into a second language.

A possible realization of a self-attention mechanism as illustrated in Fig. 7a can be described as follows: let $T ⊂ {ℝ}^{{D}_{T}}$ denote a set of tokens 902, 902' represented by multivariate feature vectors of dimensionality *D_{T}.* The attention mechanism 900 a: ${ℝ}^{{D}_{T}} \to {ℝ}^{\hat{D}}$ transforms the token 902 into an attention-based representation 910 using a similarity function 906 s: ${ℝ}^{{D}_{k}} \times {ℝ}^{{D}_{k}} \to ℝ$ yielding an attention distribution 906' as a result, and an aggregation function 908 $m : P \left({ℝ}^{{D}_{v}}\right) \to {ℝ}^{\hat{D}}$: $a \left(t\right) = m \left(\left\{s\left(q\left(t\right),k\left(u\right)\right)⋅v\left(u\right)\left|u∈T\right.\right\}\right)$ that maps attention weighted values 912 to attention-based representations 910 of the input tokens 902, 902'. Here, 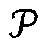 denotes the power set. The functions $q : {ℝ}^{{D}_{T}} \to$ ${ℝ}^{{D}_{k}} , k : {ℝ}^{{D}_{T}} \to {ℝ}^{{D}_{k}}$, and $v : {ℝ}^{{D}_{T}} \to {ℝ}^{{D}_{v}}$ are local feature transformations called query, key and value function that map a token *t* to a so-called query 914, key 916 and value 918. The query, key and value function can, for example, comprise a trainable parameter, e.g., one or more projection matrices. The comparison function s measures the similarity between the query 914 *q*(*t*) for the current token *t* and the key 916 *k*(*u*) for all tokens *u* ∈ *T*. Thus, similarities between different tokens in the input can be measured by the function s. The value 918 can be understood as a representation of the token *t.* The aggregation function m, thus, aggregates all values of the input weighted by their similarity to the query of the current token t. Thus, instead of using fixed values as weights as in case of convolutions, the weights depend on the input data (tokens).

An example for an attention mechanism called "scaled dot-product attention" or "soft-max attention" defines the similarity function and the aggregation function as follows: $s \left(t, u\right) = \frac{exp \left(\left〈t, u\right〉/\sqrt{{d}_{k}}\right)}{{\sum }_{u ′ ∈ T} exp \left(\left〈t,u′\right〉/\sqrt{{d}_{k}}\right)} , m \left(X\right) = {\sum }_{x ∈ X} x .$

In this implementation, the functions *k*, *q*, *v* are typically realized by a learned linear transformation (projection matrices) or a small multilayer perceptron 904. Further attention mechanisms can also be used, e.g., "additive attention" or "not-scaled dot-product attention". The aforementioned attention mechanisms are described in "Attention is all you need, A. Vaswani, N. Shazeer, N. Parmar, J. Uszkoreit, L. Jones, A. Gomez, L. Kaiser, I. Polosukhin, Advances in Neural Information Processing Systems, vol. 30. 2017".

Similarly, a cross-attention mechanism can be implemented. In this case, two sets of tokens 902 $T ⊂ {ℝ}^{{D}_{T}}$ and $U ⊂ {ℝ}^{{D}_{U}}$ are given. For example, in case of language translation *T* and *U* represent the tokens of each language stream. The attention mechanism 900 $a : {ℝ}^{{D}_{U}} \to {ℝ}^{\hat{D}}$ is defined as follows: $a \left(t\right) = m \left(\left\{s\left(q\left(t\right),k\left(u\right)\right)⋅v\left(u\right)\left|u∈U\right.\right\}\right)$ using the query, key and value functions $k : {ℝ}^{{D}_{U}} \to {ℝ}^{{D}_{k}} , q : {ℝ}^{{D}_{T}} \to {ℝ}^{{D}_{k}}$, and $v : {ℝ}^{{D}_{U}} \to$ ${ℝ}^{{D}_{v}}$. In this case, the query *q*(*t*) of a token 902 in *T* is compared to all keys 916 obtained from the tokens 902 in set *U*. Thus, the attention-based representation 910 of token *t* depends on the second set of tokens *U,* thereby implementing cross-attention.

In case the attention mechanism involves learned parameters, multiple attention mechanisms 900 with different learned parameters can be applied to the same input tokens and the attention-based representation 910 can be concatenated for further processing. This process is called multi-head attention mechanism.

Using attention mechanisms 900 has the following advantages: first, the attention-based representations 910 of the tokens 902 take into account relationships between tokens 902 from the entire input sequence instead of only from a local neighborhood as, for example, in a CNN. Second, the processing operations applied to the tokens 902 depend on the tokens instead of being fixed as, for example, in convolutions of CNNs.

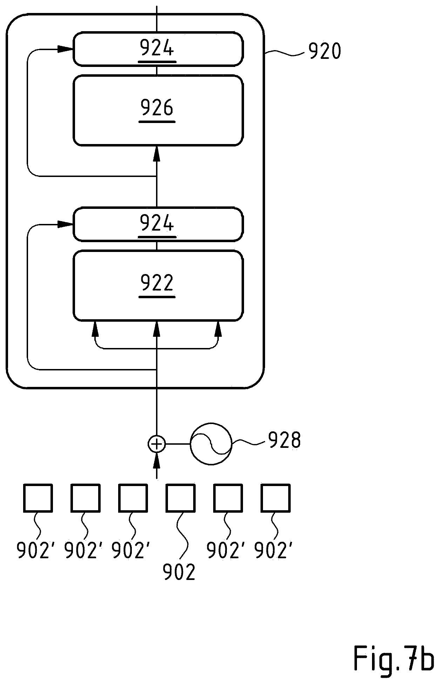

Attention mechanisms are typically used as one building block combined with other operations, for example in a Transformer block 920 as illustrated in Fig. 7b. The Transformer block 920 uses an input comprising a set of tokens 902 and positional encodings 928 that encode the position of each token within the input sequence. A multi-head attention mechanism 922 comprising multiple attention mechanisms 900 transforms the input to an attention-based representation 910 of the input. In an add & norm layer 924 the input is added to the attention-based representation 910 in order to prevent vanishing gradients during training, and the result is normalized to improve convergence of the model. A feed-forward neural network 926 is applied to transform the result into a form that can be used by the following layer. Compared to an attention mechanism, a Transformer block, therefore, provides for more stable learning due to the normalization in the add & norm layer 924 and allows for further non-linearities by means of the feed-forward neural network 926. Thus, more accurate predictions are achieved.

By using at least one attention mechanism in the machine learning model, the structural context of each word in the input text 26 can be taken into account. In fact, words in a sentence can often only be understood by considering the context of the words in the input text 26. By using attention mechanisms, this spatial context is not limited to the local receptive field of a convolution but can comprise large contexts or even the complete input data, i.e., the global context. Thus, by using at least one attention mechanism, e.g., in a transformer machine learning model, the accuracy of the predictions of the LLM is improved.

LLMs can be fine-tuned for specific tasks such as mask model modification of photolithography masks. Fig. 8 illustrates a first machine learning model in the form of a LLM 62 that receives a text 46 describing a mask model of a photolithography mask and a text 26 describing the modifications to be carried out in the mask model and generates one or more modified mask models of the photolithography mask. As pre-trained LLM, the model "gpt-4o" is used. The LLM 62 receives a mask model of a photolithography mask 24 in the form of a text 46 describing four different polygons as a sequence of corner coordinates illustrated above the text 46. The LLM 62 also receives a text 26 that describes the modification(s) applied to the mask model of the photolithography mask as follows: "Here comes a python list of polygons. Please adapt the polygon of the first square such that its lower edge is not straight but a bit wobbly." This results in two different modified mask models in the form of modified texts 48, 48', where the shape of the lower edge of the first polygon is modified. The modified mask models 48, 48' are illustrated each below the modified text 48, 48'. Thus, a single text prompt describing a modification to a mask model can lead to multiple different modified mask models, depending on the generality of the description. The more general the description, the more different modified mask models can be generated by the LLM 62. Instead of a single mask model of a photolithography mask, the LLM can receive two or multiple mask models of photolithography masks as input. The additional photolithography masks can, for example, be used as examples to define the space of mask models of photolithography masks.

Different realizations of a LLM are possible to carry out the task of mask model modification.

In an example, a pre-trained LLM is used without modifying its parameters to the specific task at hand. The LLM gpt-4o may be used here. In this case, the input of the first machine learning model could be the following text comprising the description of the mask model of the photolithography mask and the description of the desired modifications: "Hi :) Here comes a python list of polygons. polygons = [[(10, 10), (60, 10), (60, 60), (10, 60)], [(70, 10), (120, 10), (120, 60), (70, 60)], [(10, 70), (60, 70), (60, 120), (10, 120)], [(70, 70), (120, 70), (120, 120), (70, 120)]. Please adapt the polygon of the first square such that its lower edge is not straight but a bit wobbly." The output of gpt-4o is then a modified mask model of the photolithography mask in form of a list of modified polygon corners: "polygons = [[(10, 10), (60, 10), (60, 60), (55, 60), (50, 65), (45, 60), (40, 65), (35, 60), (30, 65), (25, 60), (20, 60), (10, 60)], [(70, 10), (120, 10), (120, 60), (70, 60)], [(10, 70), (60, 70), (60, 120), (10, 120)], [(70, 70), (120, 70), (120, 120), (70, 120)]]".

An alternative realization could be via LLMs and in-context learning. In this case, a few (e.g., 5 to 10) examples showing how to carry out the desired task are used as additional input to the LLM. The examples comprise mask model descriptions, desired modification descriptions and corresponding modified mask models and are presented to the LLM together with the current mask model and the desired modifications description to this current mask model. The LLM then learns from the context of the examples to modify the current mask model according to the desired modifications.

Setting up large and complex machine learning models, such as those used for LLMs such as ChatGPT, requires a lot of time and resources. Once this process is complete, the model may be generally powerful and accurate, but it is not necessarily tuned to perform specific tasks. Therefore, in another example, the LLM is fine-tuned to the specific task of photolithography mask model modification by learning valid photolithography mask structures and patterns from sample data. In particular, the LLM is trained to predict a subsequent polygon point from a given sequence of polygon points. However, given the large number of parameters in the LLM this fine-tuning process is expensive and time-consuming. Low-rank adaptation (LoRA) is a way of adapting a large machine learning model for specific applications without having to retrain the entire model.

To this end, a language pre-trained LLM may be used as starting point. This pre-trained LLM is adapted to the domain of photolithography mask models by fine-tuning using low-rank adapters. While the pre-trained weights remain fixed, LoRA adds low-rank matrices to the provided machine learning model. These matrices contain new weights that are applied to the model when generating results. This process changes the outputs of the model with minimal computational power and training time.

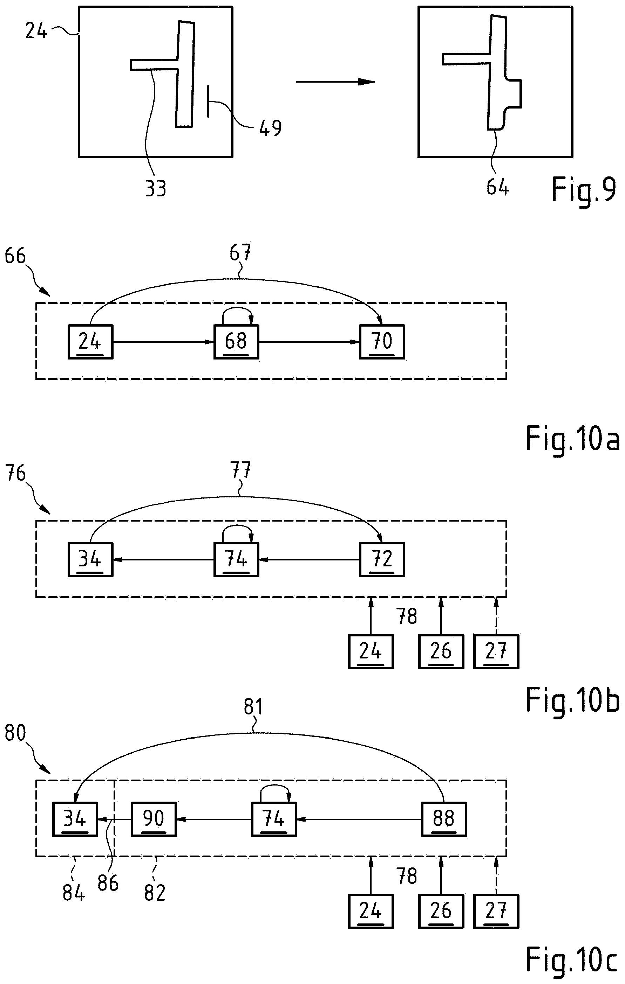

According to an aspect of the invention illustrated in Fig. 9, the desired modifications comprise one or more contour variations 49 of structures 33 of the mask model 24, and the first machine learning model 28 is trained to map a contour section of a structure of a mask model and one or more contour variations 49 to a closed contour of a structure of the mask model 24. A contour variation 49 comprises, for example, one or more points, one or more contour sections or one or more areas that are to be integrated into the structures 33 of the mask model 24. In Fig. 9, for example, a contour variation 49 is given in form of a contour section (line), which is integrated into the structure 33 of the mask model 24 by modifying the contour of the structure 33. To integrate the contour variations 49 into the structures 33 of the mask model 24, the first machine learning model 28 can be trained to continue contours in a way that is typical for contours of structures of photolithography masks. The first machine learning model 28 can be trained to map a contour section of a structure 33 of a mask model 24 and one or more contour variations 49 to a closed contour of an integrated structure 64. The integrated structure then comprises both, the contour section of the structure 33 and the one or more contour variations 49. In other words, given a contour section, the first machine learning model can be trained to continue the contour section to a closed contour while integrating the one or more contour variations 49. The first machine learning model 28 may be trained to map a contour section of a structure of a mask model 24 of a photolithography mask and one or more contour variations 49 to a subsequent contour point of the contour section.

The structures can, for example, be represented by polygons. The first machine learning model can be a pre-trained LLM that is adapted using LoRA as described above. For the fine-tuning, sample data comprising polygon representations of mask models are used in text form. The LLM is then trained to predict a subsequent polygon point ("token") from a sequence of polygon points along the contour of a structure.

The sample data for fine-tuning the LLM can, for example, be generated using polygons from various mask models of photolithography masks as ground truth polygons. In the ground truth polygons, contour sections can be randomly removed, and portions of these removed contour sections can be used as contour variations to generate corresponding sample data. The training can be based on a cross-entropy loss of a predicted polygon point (token) and the corresponding ground truth polygon point (token). In this way, the LLM learns to predict further polygon points from sequences of polygon points. It learns to complete polygons according to principles derived from the sample data from the photolithography mask model domain. The trained LLM including the domain-specific knowledge can then be prompted using text similar to the previous example above. Alternatively, it can be prompted using a subsection of a mask model to be modified, e.g., a sequence of polygon points, and a desired modification, e.g., an additional polygon point that is not part of the original mask model (e.g., a point randomly located close to the last polygon point). The LLM then predicts further polygon points as continuation of the sequence of polygon points using the domain-specific knowledge about valid mask models of photolithography masks.

An LLM can use further information as well for generating modified mask models of photolithography masks. Further information can, for example, comprise information on an image acquisition process in case the LLM directly generates images of modified mask models, e.g., a photon count, a defocus, an acquisition time, type or properties of the illumination, noise statistics, a noise type, aberration, pixel-size on sensor, apodization, dark current, stray light, stage blur, line edge roughness, and further optical parameters or machine parameters. The further information can comprise high-level information on the mask model of the photolithography mask, for example, the type of integrated circuit patterns, e.g., lines and spaces, pillars, memory patterns, logical patterns, etc. The further information can comprise information on properties of the photolithography mask, e.g., on the materials or dimensions within the photolithography mask. The further information can also comprise information on the image of the modified mask model to be generated, e.g., on properties of the image, e.g., the quality of the image, the size of the image, the appearance of the image, etc. Further information can, for example, be introduced in a transformer just like the positional encodings 928 in Fig. 7b.

In an example, the input (e.g., the text) and/or the output (e.g., the generated one or more modified mask models or images) of the first machine learning model are reviewed and/or revised using one or more agents. An agent refers to a procedure, e.g., a machine learning model or some other method, that reviews or revises an input or an output of the first machine learning model. In this way, the quality of the generated modified mask models can be improved.

For example, a first agent could comprise an LLM that maps the text to a revised text. For example, the first agent could define words in the text, e.g., specific defects or types of structures. For example, the first agent could map a text such as "give me a protrusion" to a revised text describing what a protrusion is, e.g., "give me a white structure on a black background of size X in location Y of the image". The size parameter X and the location parameter Y could be generated randomly from a range of possible sizes and locations.

A second agent could, for example, review the output of the first machine learning model to check if it meets a defect specification or a specification of structures in an integrated circuit, etc. For example, the second agent could comprise a machine learning model that maps the output of the first machine learning model (e.g., text or image) to a quality assessment ("in specification", "outside specification"), In case, the quality is insufficient, the generated modified mask model can be discarded. Alternatively, the second agent could improve the output. Alternatively, the second agent could modify the text input of the first machine learning model to obtain an improved modified mask model, e.g., by specifying a size or size range or a location of a generated defect or structure, or a minimum distance between structures in the modified mask model, etc.

In another example, the first machine learning model comprises a diffusion model, in particular a conditional diffusion model, in particular a latent conditional diffusion model.

Diffusion models are latent variable generative machine learning models. A diffusion model consists of three major components: the forward process, the reverse process, and the sampling procedure. The goal of diffusion models is to learn a diffusion process for a given dataset, such that the process can generate new elements that are distributed in a learned manifold similarly to the original dataset. For example, the diffusion model is trained to generate images of mask models of photolithography masks. Diffusion models typically involve training a neural network to sequentially denoise images blurred with Gaussian noise. The model is trained to reverse the process of adding noise to an image. After training to convergence, it can be used for image generation by starting with an image composed of random noise, and applying the network iteratively to denoise the image. Diffusion-based image generators such as Stable Diffusion and DALL-E typically combine diffusion models with other models, such as text-encoders and cross-attention modules to allow text-conditioned generation.

To generate sample data 66, as illustrated in Fig. 10a, a diffusion process 67 is applied to an image, e.g., an image of a mask model 24 of a photolithography mask, by iteratively applying a stochastic process step 68. Each stochastic process step 68 transforms the image into a "more random" version of the image, it degrades the image. A stochastic process step 68 can, for example, comprise noising, blurring, masking, pixelation, morphing or filtering.

The term "noising" means to add any kind of noise to the image, e.g., Gaussian noise, salt and pepper noise, shot noise, pattern noise, etc. Adding pattern noise to an image means that the integrated circuit patterns are slightly disrupted, e.g., by increasing the line edge roughness or by making slight modifications to the integrated circuit patterns. The term "blurring" means to blur the image or reduce the sharpness of the image, the term "masking" means to mask one or more parts of the image, the term "pixelation" means to replace the values of groups of pixels by a single average value, thereby generating the impression of a reduced resolution, the term "morphing" means to morph the image into another image, the term "filtering" means to apply some kind of filtering operation to the aerial image, wherein the filter size can be selected randomly.

The sample data then comprises the original images and the iteratively transformed images, e.g., the mask models and the transformed mask models.

During training of the diffusion model 76, as shown in Fig. 10b, the diffusion process 67 is reversed. Given a random image 72, the diffusion model 76 learns to recover the original image by iteratively applying a reverse stochastic process step 74. The diffusion model 76, therefore, may consist of a sequence of machine learning models, each of which is trained to reverse one of the stochastic process steps 74. In this way, the diffusion model 76 learns to apply a reverse diffusion process by gradually removing the effect of the stochastic process steps from the random image 72. Depending on the original images, the diffusion model 76 learns to transform a random image 72 to the space of original images, e.g., to the space of photolithography mask models.

According to an example, the diffusion model is a conditional diffusion model 76 as illustrated in Fig. 10b. A conditional diffusion model 76 is conditioned 78 on additional information, e.g., on an image, a text, or further information. In this way, the conditional diffusion model 76 does not learn to generate arbitrary images from the space of original images, but specific images from this space. It is trained to generate modified mask models 34 from a mask model of a photolithography mask according to the described modifications. This is accomplished by using the mask model 24 of the photolithography mask and the text 26 describing the desired modifications as additional input (condition 78) to the conditional diffusion model 76.

According to an example illustrated in Fig. 10c, the conditional diffusion model is a latent conditional diffusion model 80 that operates in a latent space 82 of the original image space 84. The latent space 82 enables the extraction of essential features from the high-dimensional original images. The latent conditional diffusion model 80 is trained using sample data that is mapped into the latent space 82. It comprises an inverse mapping 86 from the latent space 82 back to the original image space 84. The trained latent conditional diffusion model 80 maps a latent random image 88 in latent space 82 to a latent representation 90 of an image after the reverse diffusion process in latent space 82 by iteratively applying a reverse diffusion process step 74 to the latent random image 88, and it maps 86 the latent representation 90 of the image to the original image space 84. The mapping from the original image space 84 to the latent space 82 (not shown) and the inverse mapping 86 from the latent space 82 to the original image space 84 can, for example, be carried out by a pair of a trained encoder and a decoder, e.g., an autoencoder. The encoder maps a mask model 24 in the original image space 84 to a latent representation of the mask model 24 in latent space 82 during sample data generation. The decoder as inverse mapping 86 maps the latent representation 90 of a generated modified mask model in latent space 82 to the modified mask model 34 in the original image space 84. The use of a latent conditional diffusion model 80 is advantageous, since the information in the original image space 84 is compressed in the latent space 82. Thus, the compressed information in latent space 82 is less complex and contains only the most relevant information. For this reason, the latent conditional diffusion model 80 is very fast to apply and very accurate since it concentrates on the most relevant information contained in the input data in the original image space 84. The latent diffusion model allows the generated samples to cover a continuous manifold of feasible mask designs. In addition, latent conditional diffusion models provide additional control in terms of a continuous (relative) weighting factor for the conditions, here for the mask model 24 and the text 26. A high weight for the mask model leads to modified mask models that are close to the provided mask model and, thus, only allow for small variations. A high weight for the text leads to a higher impact of the abstract definitions of the modifications in the text and, thus, to larger variations within the modified mask model. By according a high weight to the text, for example, various variations of a mask model can be generated that contain a specific type of defect.

Sequentially reversing the diffusion process 67 comprises applying a learned reverse stochastic process step 74 to the latent random image 88 in a first time step and to the result of the respective previous reverse stochastic process step 74 in all following time steps, wherein the learned reverse stochastic process step 74 reverses a time step of the diffusion process 67. The time steps can also be called refinement steps or diffusion steps or iterations. Preferably, at least two time steps, more preferably at least 5 time steps, most preferably at least 10 time steps are used. Usually between 10 and 1,000, preferably between 20 and 300 time steps, more preferably between 25 and 200 time steps, most preferably between 50 and 100 time steps are carried out. Using speed up techniques during inference, even between 5 and 10 time steps can be sufficient.

The time step t = *T*,..,0 can be used in the form of a time step embedding 104 as additional input to the reverse stochastic process step 74 (see Fig. 10b). The time step t can, for example, be encoded using a positional embedding similar to the positional encodings in Transformer architectures. In the first time step *t = T* the reverse stochastic process step 74 is applied to the latent random image 88, whereas in the further time steps *t = T -* 1,..,0 the reverse stochastic process step 74 is applied to the result of the respective previous reverse stochastic process step 74. By using the time step t as input, only a single reverse stochastic process step needs to be learned and implemented. For example, in case the stochastic process is a noising process, a single denoising step can be trained to reverse the noising process by sequentially applying the denoising step to the latent random image 88. Instead of applying the reverse stochastic process step 74 for each single time step corresponding to a standard Markovian assumption, two or more reverse stochastic process steps can be carried out simultaneously. For example, in case of a noising process, the noise for n repeated reverse stochastic process steps can be statistically predicted (e.g., by applying n Gaussian processes) and the resulting noise image can be directly subtracted from the input image, thereby applying n reverse stochastic process steps simultaneously.

There are different ways of implementing a reverse stochastic process step 74. For example, the reverse stochastic process step 74 can directly revert a time step of the stochastic process, e.g., in case of a noising process, the image can be mapped to a less noisy image. In another example, the reverse stochastic process step 74 can estimate the effect of the stochastic process step, i.e., the difference between the image and a reverse-transformed version of the image and subsequently remove the difference from the image. The reverse stochastic process step 74 can also directly predict a corresponding image of the learned manifold in the original image space 84. The predicted image of the manifold can be used to modify the current image with a change towards the predicted image of the learned manifold, or the predicted image of the learned manifold can be subsequently modified by applying multiple time steps of the stochastic process. The reverse stochastic process step 74 can also predict the difference between the image and a corresponding image of the learned manifold. The difference can then be scaled and subtracted from the, optionally scaled, image in the reverse stochastic process step. Optionally, the reverse stochastic process step can further comprise adding an additional scaled random image, e.g., a scaled Gaussian i.i.d. noise sample, to the reverse-transformed image.

In another example, the trained conditional diffusion model 76 contains a sequence of (potentially different) reverse stochastic process steps 74 that are jointly trained as reverse diffusion process 77. The output of a reverse stochastic process step 74 is the input of the following reverse stochastic process step 74, and the input of the first reverse stochastic process step 74 of the sequence is a random image 72. In case the stochastic process is a noising process, the reverse stochastic process step 74 of the trained conditional diffusion model 76 is implemented as a sequence of reverse stochastic process steps 74 in the form of denoising steps that each is trained to map the output of the previous denoising step to a less noisy version thereof, and wherein the initial sample is a noise sample, e.g., containing Gaussian noise. The denoising steps can be different, or they can be identical. By using a sequence of reverse stochastic process steps 74 that each reverses a time step of the diffusion process 67 the model learns to correct itself in each step.

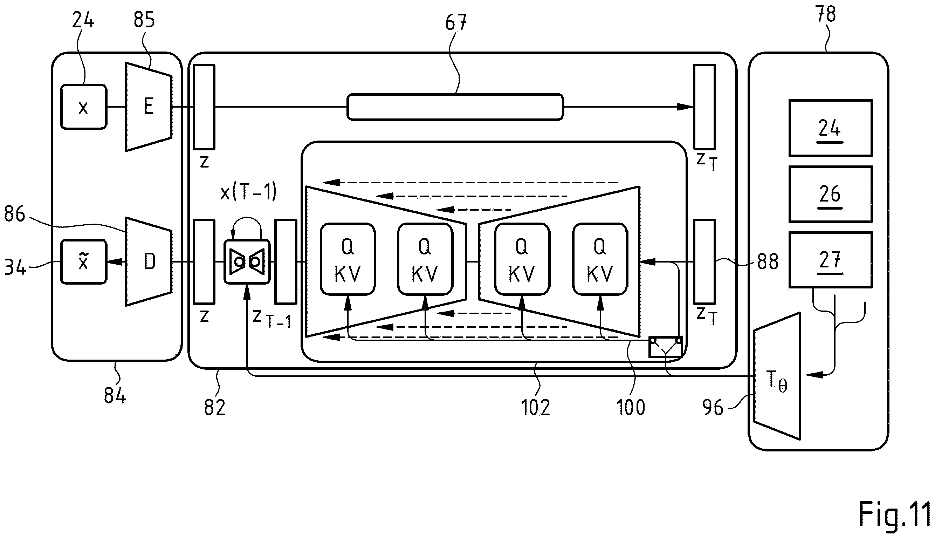

In an example illustrated in Fig. 11, the learned reverse stochastic process step 74 comprises a trained time-conditioned image-to-image neural network 102. An image-to-image neural network 102 is a neural network that learns a mapping from an input image, or an input tensor, *z_{T}* to an output image, or an output tensor *z*_{*T*-1}. Thus, the input and the output of the neural network are images, or tensors, e.g., in case of latent diffusion models. In case of a latent diffusion model, the input 24 is mapped 85 from an original image space 84 to a latent space 82, and the result of the reversed diffusion process *z*₀ is mapped back 86 from the latent space 82 to the original image space 84. Image-to-image neural networks 102 comprise, for example, encoder-decoder neural networks, U-Nets and autoencoders. The image-to-image neural network 102 can, optionally, comprise quantization operations.

The time-conditioned image-to-image neural network 102 can be trained to perform a reverse stochastic process step 74 for a given time step. The time-conditioned image-to-image neural network 102 can alternatively be trained to predict the difference between the image and a reverse-transformed version of the image, e.g., the noise. The difference is then subtracted from the image in the reverse stochastic process step 74. The time-conditioned image-to-image neural network 102 can be trained to predict the difference between the image and a corresponding image of the learned manifold. The difference is then scaled and subtracted from the, optionally scaled, image in the reverse stochastic process step 74. The time-conditioned image-to-image neural network 102 can also be trained to directly predict a corresponding image of the learned manifold. Due to the inaccuracy of a direct prediction, the prediction can be used to modify the image in a direction towards the manifold. The reverse stochastic process step 74 can, for example, take only a small step towards the predicted image of the learned manifold, e.g., by computing a convex combination of the image and the predicted image. Alternatively, the reverse stochastic process step 74 can take the predicted image of the manifold and subsequently apply the stochastic process (e.g., the noising process) multiple times, e.g., t-1 times at a given time step t, to obtain a reverse transformed-transformed version of the image that is only a small step closer to the manifold. Optionally, the reverse stochastic process step 74 can further comprise adding an additional scaled random image, e.g., a scaled Gaussian i.i.d. noise sample, to the reverse-transformed image.

In case of a (latent) conditional diffusion model, the conditional information can be provided to the conditional diffusion model 76 in different ways. It can be used as additional input to the trained conditional diffusion model 76, in particular, to the reverse diffusion process 77, more particular to the reverse stochastic process step 74. For example, the conditional information can be concatenated 104 to the random image 72 and to the result of each reverse stochastic process step 74 that is used as input to the subsequent reverse stochastic process step. In another example, the conditional information is processed as separate inputs in each reverse stochastic process step 74. In another example, the conditional diffusion model 76 is conditioned on the additional information by using one or more cross-attention layers 100 in the time-conditioned image-to-image neural network 102 to process the additional information. Cross-attention layers 100 transform their input into a new representation called attention-based representation by processing or paying attention to another data source such as the mask model 24 of the photolithography mask, the text 26 or further information 27. Attention-based representations have been described above with respect to Fig. 7a, 7b.

The conditional diffusion model can be, additionally, conditioned on further information 27. The further information 27 can, for example, comprise information on an image acquisition process in case the diffusion model directly generates images of modified mask models, e.g., a photon count, a defocus, an acquisition time, type or properties of the illumination, noise statistics, a noise type, aberration, pixel-size on sensor, apodization, dark current, stray light, stage blur, line edge roughness, and further optical parameters or machine parameters. The further information 27 can comprise high-level information on the mask model of the photolithography mask, for example, the type of integrated circuit patterns, e.g., lines and spaces, pillars, memory patterns, logical patterns, etc. The further information 27 can comprise information on properties of the photolithography mask, e.g., on the materials or dimensions within the photolithography mask. The further information 27 can also comprise information on the image of the modified mask model to be generated, e.g., on properties of the image, e.g., the quality of the image, the size of the image, the appearance of the image, etc.

The additional information used as condition in the conditional diffusion model is usually provided in a transformed or encoded way, e.g., a text in the form of tokens (vectors representing words or other entities), images in the form of a vector of pixels, etc.

The possibility of indicating further information is what makes conditional diffusion models especially interesting for generating modified mask models of photolithography masks.

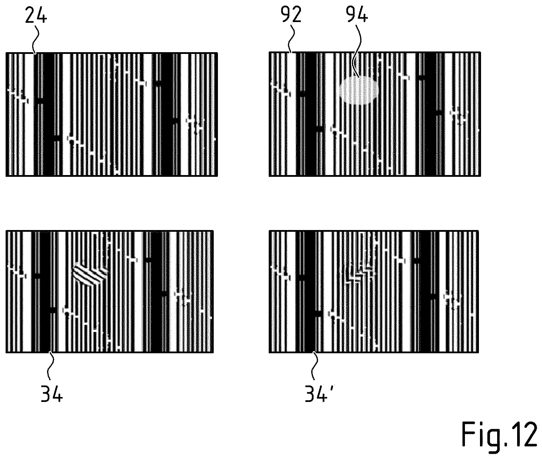

For modifying mask models 24 of photolithography masks, inpainting diffusion models can be used as illustrated in Fig. 12. Inpainting methods reconstruct missing regions in images from their context. To this end, an inpainting mask 92 is used as additional information in the condition of a conditional diffusion model. The inpainting mask 92 indicates inpainting regions 94 where the mask model 24 is to be modified. The conditional diffusion model is trained to reconstruct only the inpainting regions 94 in the mask model 24 indicated by the inpainting mask 92 to naturally blend with the remaining part of the mask model. The mask model in Fig. 12 is modified using a conditional diffusion model for inpainting, in particular the pre-trained "v1-5-pruned-emaonly checkpoint", that is conditioned on the mask model 24, on the inpainting mask 92 and on a text saying "crossing continuous lines, black and white". From this information, the inpainting diffusion model generates modified mask models of the photolithography mask 34, 34'. Both modified mask models contain different modifications of the original mask pattern within the inpainting region 94 that could be real mask models of photolithography masks. This is due to the fact that the inpainting diffusion model learned from sample data the manifold or space of realistic circuit patterns on photolithography masks and is able to generate samples within this manifold.

For modifying mask models 24 of photolithography masks, further diffusion models can be used to combine semantic contents and styles from multiple mask models of photolithography masks. The generated modified mask models of photolithography masks are not limited to a combination of simple building blocks but contains a wide variety of elements, such as diagonal and curvilinear features. To this end, a stable diffusion model is used.

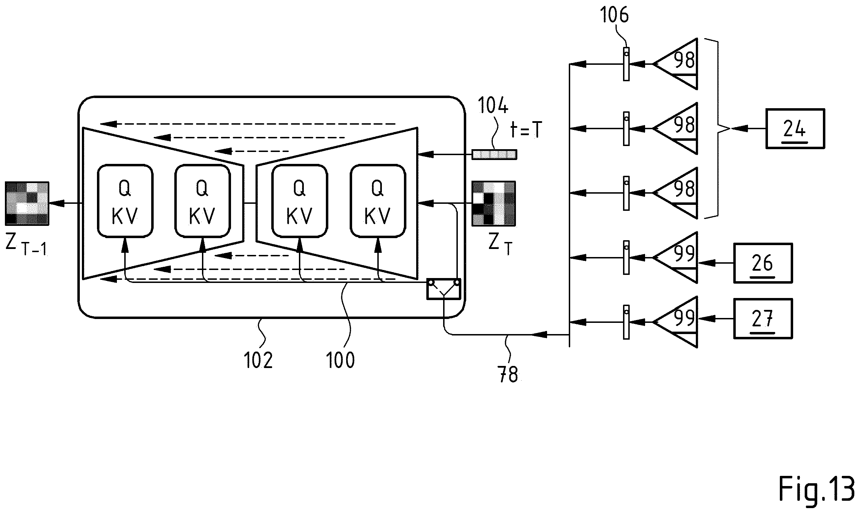

Stable diffusion is a deep learning, text-to-image model released in 2022 based on diffusion techniques. It is primarily used to generate detailed images conditioned on text descriptions. As illustrated in Fig. 13, stable diffusion is a specific latent conditional diffusion model comprising: a variational autoencoder (VAE) for transforming images to latent space (see reference symbol 85 in Fig. 11), a neural network 102 in the form of a U-Net implementing the reverse stochastic process step, and a text encoder.

The VAE encoder compresses the image from the original image space to a lower dimensional latent space, capturing a more fundamental semantic meaning of the image. Gaussian noise is iteratively applied to the compressed latent representation during forward diffusion. The U-Net 102, composed of a ResNet backbone, denoises the output of the diffusion process backwards to obtain a latent representation. Finally, the VAE decoder (see reference symbol 86 in Fig. 11) generates the final image by converting the representation back into the original image space.

The stable diffusion model can be implemented using the so-called ImageMixer stable diffusion model, which is a version of an image-conditioned stable diffusion model. The image-conditioned stable diffusion model can be obtained by replacing the text-encoder of stable diffusion with an image encoder for encoding the mask model 24 of the photolithography mask, particularly with an ViT-L/14 model followed by a projection layer. Thus, for mask model modification, the text encoder of the stable diffusion model is replaced by encoders 98, 99 for encoding the conditions of the latent conditional diffusion model, which are given in the form of images or text. The encoders 98, 99 are used to map images and text to embeddings 106 (feature vectors). The encoders 98, 99 can be implemented using contrastive language pre-training (CLIP) neural networks. These are trained to generate images from text or text from images. To transform images of mask models 24 of photolithography masks to embeddings 106, an encoder 98 trained for mapping images to text is used. To transform text 26 to embeddings 106, an encoder 99 trained for mapping text to images is used. Further information 27 can be mapped to embeddings 106 in the same way using the corresponding encoders 98, 99. Instead of conditioning the conditional diffusion model on a single mask model of a photolithography mask, the conditional diffusion model can be conditioned on two or multiple mask models of photolithography masks. Thus, two or multiple mask models (for example, 5 to 10) are used as input to the conditional diffusion model. In this way, the mask model generation can be better controlled, and more variability can be introduced into the modified mask model. Apart from additional mask models, a modified mask model from a predefined catalogue of modifications (as described above) can be used as condition. In order to integrate multiple mask model images, the text 26 and, optionally, further information 27, the mask model is, thus, trained to not only accept a single conditioning mask model image via the projected CLIP embeddings 106, but to accept multiple images by concatenating their embeddings 106 along the sequence dimension and along with the CLIP-text-encoded text 26 and, optionally, further information in the form of text or images. The embeddings 106 can be concatenated to the input of the U-Net 102, or they can be introduced into the U-Net 102 via cross-attention layers 100.

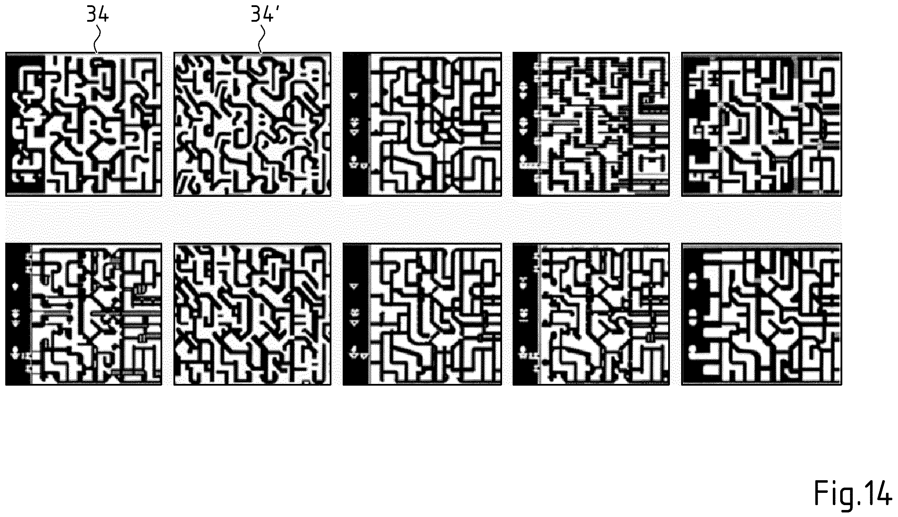

The model can be trained in two stages: first training only the cross-attention layers 100, which fuse the conditions and a representation of the current sample during the diffusion process in the U-Net 102 in the conditional diffusion model. After that, the entire U-Net 102 is fine-tuned. In this way, the conditional diffusion model can be trained particularly fast to adapt to the domain of photolithography mask models. Fig. 14 illustrates modified mask models generated by this described mask model for the text prompt "lines, dots, squares, crosses, letter Z, spline, semicircle, black and white, high contrast, binary, lithographic photomask".

In an example, the modified mask models of photolithography masks are post-processed. Post-processing can, for example, include transformations of the format of the modified mask models, e.g., a transformation from a raster image to a polygon representation. This transformation can, for example, be carried out using edge detectors, object detectors or triangulation. Post-processing can also include methods to improve the generated modified mask models, e.g., by filtering very small or very large structures, by filtering very small and, thus, irrelevant deviations from the provided mask model or very large and, thus, unrealistic deviations from the provided mask model.

The training of any or all of the machine learning models described above can be carried out using one or more hardware acceleration devices comprising graphics processing units, tensor processing units, field programmable gate arrays or application specific integrated circuits, in order to reduce the computation time.

According to an example, the sample data further comprises images of the multiple provided mask models of photolithography masks and/or labels indicating the modified locations in the mask model of the photolithography mask. The images of the multiple provided mask models can be used as additional sample data along with the images of the modified mask models. In this way, the amount of training images is increased. In addition, the images of the provided mask models can be used as reference images for training a second machine learning model for defect inspection. Labels indicating the modified locations in the mask model can also be used in the training process of a second machine learning model for quality inspection, e.g., for defect detection machine learning models. Defect detection can, for example, refer to anomaly detection, defect localization or defect segmentation. The labels can be used to improve the training process by providing additional information on the modifications, e.g., the location of defects or modifications.

A reference image refers to an image of a photolithography mask or of a section thereof, that represents (at least approximately) the same structures as the image of the photolithography mask. The reference image can be of the same type as the image or of a different type such as a SEM image or a design image. A reference image can comprise an acquired image of the same photolithography mask, e.g., at a different point in time, using a different optical system, using the same optical system with different settings, using a different section of the same photolithography mask that contains the same structures, etc. An image can also be used as a reference image for itself, e.g., a mirrored image can be used as a reference image in case the image contains structures that are self-symmetrical. A reference image can comprise an acquired image of a different photolithography mask comprising the same structures as the image of the photolithography mask using the same or a different optical system. A reference image can also comprise a simulated image. An image can be simulated from a mask model of a photolithography mask using image simulation methods described above. A reference image can also comprise a mask model of the photolithography mask. The appearance of the mask model of the photolithography mask can be adapted to look like an acquired image of the photolithography mask, e.g., using simulation software or machine learning models for appearance modification such as generative adversarial models or conditional generative adversarial models.

In order to increase the amount of sample data, the pairs of images and corresponding reference image can be extended by adding images of mask models and modified mask models using the methods described above.

In an example, the sample data comprises pairs of input images and reference images, each input image being an image of a modified mask model of a photolithography mask and each reference image being an image of the corresponding provided mask model of the photolithography mask. Such pairs or image and reference image can be used for training second machine learning models for quality inspection, e.g., by providing an image of a modified mask model as input image (potentially including a defect) and the corresponding image of the provided mask model as a reference image and, optionally, labels of the modifications. For example, die-to-die or die-to-database based defect detection methods can be trained in this way. Alternatively, only the modified mask models and the labels can be used for training of a second machine learning model for quality inspection.

According to an example, the generated sample data is configured for training a second machine learning model for detecting defects in images of photolithography masks, the sample data comprises pairs of input images and reference images, each input image being an image of a modified mask model of a photolithography mask and each reference image being an image of the corresponding provided mask model of the photolithography mask. Optionally, labels describe the introduced defects in the modified mask model of the photolithography mask. The sample data can then be used to train the second machine learning model. The second machine learning model can then be used for defect detection in photolithography masks. In this way, images obtained by an optical inspection system or by an optical mask qualification system as shown in Fig. 1 and 2 can be checked for defects using the trained second machine learning model.

According to an embodiment of the invention, a method for detecting defects in photolithography masks comprises: providing (or acquiring) an image of a photolithography mask; applying a machine learning model for defect detection to the image of the photolithography mask, wherein the machine learning model for defect detection is trained using sample data generated according to any one of the embodiments, examples or aspects described above.

According to an example, the generated sample data is configured for training a second machine learning model for measuring deviations of structures in images from corresponding structures in reference images, wherein the sample data comprises pairs of input images and reference images, each input image being an image of a modified mask model of a photolithography mask and each reference image being an image of the corresponding provided mask model of the photolithography mask. Optionally, labels describe the transformations of structures in the modified mask model. The sample data can then be used for training the second machine learning model. The second machine learning model can then be used for metrology in photolithography masks. In this way, images obtained by an optical metrology system as shown in Fig. 1 and 2 can be inspected using the trained second machine learning model.

According to an embodiment of the invention, a method for taking measurements in photolithography masks comprises: providing (or acquiring) an image of a photolithography mask; applying a machine learning model for metrology in photolithography masks to the image of the photolithography mask, wherein the machine learning model for metrology is trained using sample data generated according to any one of the embodiments, examples or aspects described above.

According to an embodiment of the invention, a computer implemented method for training a machine learning model for quality inspection of a photolithography mask comprises: generating sample data for training the machine learning model according to any one of the embodiments, examples or aspects described above; and training the machine learning model by modifying parameters of the machine learning model by optimizing a loss function using sample data comprising the generated sample data. The loss function can, for example, comprise a cross-entropy loss, e.g., of predicted defects and labeled defects.

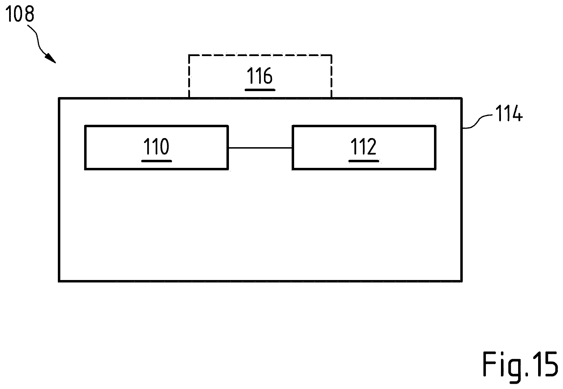

According to an embodiment of the invention illustrated in Fig. 15, a system 108 for generating sample data for training a machine learning model comprises: one or more processing devices 110; one or more machine-readable hardware storage devices 112 comprising instructions that are executable by one or more processing devices 110 to perform operations comprising a method 22 for generating sample data for training a machine learning model according to any one of the embodiments, examples or aspects described above.

The system 108 optionally comprises a database for loading and/or saving data, e.g., mask model catalogues, probability distributions, machine learning model parameters, pre-trained models, pre-defined texts describing modifications of mask models, etc. The system 108 can, optionally, comprise a text prompt 116 for entering text describing desired modifications of a mask model. The data analysis device 114 includes one or more processors 110, e.g., implemented as a CPU,GPU or TPU. The one or more processors 110 can load program code from a hardware-storage device 114, e.g., program code for executing a computer implemented method 22 for generating sample data for training a machine learning model as described above. The one or more processors 110 can execute the program code. The system 108 optionally comprises a user interface, e.g., for entering machine learning parameters, for controlling the training progress, etc.

Reference throughout this specification to "an embodiment" or "an example" or "an aspect" means that a particular feature, structure or characteristic described in connection with the embodiment, example or aspect is included in at least one embodiment, example or aspect. Thus, appearances of the phrases "according to an embodiment", "according to an example" or "according to an aspect" in various places throughout this specification are not necessarily all referring to the same embodiment, example or aspect, but may. Furthermore, the particular features or characteristics may be combined in any suitable manner, as would be apparent to one of ordinary skill in the art from this disclosure, in one or more embodiments.

Furthermore, while some embodiments, examples or aspects described herein include some but not other features included in other embodiments, examples or aspects combinations of features of different embodiments, examples or aspects are meant to be within the scope of the claims, and form different embodiments, as would be understood by those skilled in the art.

Embodiments, examples and aspects of the invention are also described in the following clauses:
1. A computer implemented method 22 for generating sample data 40, the method comprising:
   - Providing multiple mask models 24 of photolithography masks 14 comprising structures 33;
   - Modifying the multiple mask models 24 of photolithography masks 14 using a first machine learning model 28, wherein the first machine learning model 28 receives a mask model 24 of a photolithography mask 14 and a text 26 describing one or more desired modifications 38 as input and generates one or more modified mask models 34, 34' or images 36, 36' of the one or more modified mask models 34, 34' as output 30;
   - Generating sample data 40 comprising images 36, 36' of the multiple modified mask models 34, 34' of photolithography masks 14, wherein the generated sample data 40 is configured for developing or evaluating a method for quality inspection of photolithography masks 14.
2. The method of clause 1, wherein the desired modifications 38 comprise the introduction of defects in structures of the mask model 24 of the photolithography mask 14.
3. The method of clause 2, wherein the generated sample data is configured for training a second machine learning model 42 for detecting defects in images 36, 36' of photolithography masks 14, wherein the sample data 40 comprises pairs of input images and reference images, each input image being an image 36 of a modified mask model 24 of a photolithography mask 14 and each reference image being an image 36 of the corresponding provided mask model 24 of the photolithography mask 14.
4. The method of any one of the preceding clauses, wherein the desired modifications 38 comprise transformations of structures of the mask model 24 of the photolithography mask 14.
5. The method of clause 4, wherein the generated sample data is configured for training a second machine learning model 42 for measuring deviations of structures in images from corresponding structures in reference images, wherein the sample data comprises pairs of input images and reference images, each input image being an image 36 of a modified mask model 34 of a photolithography mask 14 and each reference image being an image 36 of the corresponding provided mask model 24 of the photolithography mask 14.
6. The method of any one of the preceding clauses, wherein the desired modifications 38 comprise the introduction of structures generated by a third machine learning model into the mask model 24 of the photolithography mask 14.
7. The method of any one of the preceding clauses, wherein the desired modifications 38 comprise one or more contour variations 49 of one or more structures 33 of the mask model 33, and wherein the first machine learning model is trained to map a contour section of a structure 33 of a mask model 24 and one or more contour variations 49 to further contour points of the contour section, in particular to a closed contour, representing a structure 33 of a modified mask model 34, 34'.
8. The method of any one of the preceding clauses, wherein the first machine learning model is trained to map a sequence of contour points of one or more structures 33 of a mask model 24 and one or more desired modifications to further contour points of the sequence, the result representing a structure 33 of a modified mask model 34, 34' that integrates the sequence of contour points and the desired modifications.
9. The method of any one of the preceding clauses, wherein the first machine learning model is trained to integrate desired modifications into sequences of contours of structures 33 of mask models 24 by predicting further contour points of the sequences, particular according to principles of photolithography mask model structures learned from training data.
10. The method of any one of the preceding clauses, wherein the first machine learning model 28 receives two or multiple mask models 24 of photolithography masks and a text 26 describing one or more desired modifications 38 as input.
11. The method of any one of the preceding clauses, wherein the first machine learning model 28 comprises a conditional generative machine learning model that uses the mask model 24 and the text 26 as conditional input and that is trained to generate one or more modified mask models 34, 34' or images 36, 36' of the one or more modified mask models 34, 34'.
12. The method of any one of the preceding clauses, wherein the first machine learning model 28 comprises a large language model 62.
13. The method of any one of the preceding clauses, wherein the first machine learning model 28 comprises a diffusion model 76, 80.
14. The method of any one of the preceding clauses, wherein the sample data 40 further comprises images 36, 36' of the multiple provided mask models 24 of photolithography masks 14 and/or labels 37 indicating the modified locations 38 in the mask model 24 of the photolithography mask 14.
15. The method of any one of the preceding clauses, wherein the sample data 40 comprises pairs of input images and reference images, each input image being an image 36 of a modified mask model 24 of a photolithography mask 14 and each reference image being an image 36 of the corresponding provided mask model 24 of the photolithography mask 14.
16. The method of any one of the preceding clauses, wherein an image of a mask model of a photolithography mask in the sample data is obtained using a simulation method that simulates an acquired image from a mask model of a photolithography mask, or by acquiring an image of a photolithography mask manufactured for the mask model.
17. The method of any one of the preceding clauses, wherein the generated sample data is configured for training a second machine learning model 42 for quality inspection of photolithography masks 14.
18. A computer implemented method for training a machine learning model 42 for quality inspection of a photolithography mask 14, the method comprising:
   - Generating sample data 40 according to any one of the preceding clauses;
   - Training the machine learning model 42 by modifying parameters of the machine learning model 42 by optimizing a loss function using sample data comprising the generated sample data 40.
19. A computer program comprising instructions which, when the program is executed by a computer, cause the computer to carry out a method 22 for generating sample data 40 according to any one of clauses 1 to 17 or for training a machine learning model according to clause 18.
20. A data carrier signal carrying the computer program of clause 19.
21. A computer-readable medium, on which a computer program executable by a computing device is stored, the computer program comprising code for executing a method 22 for generating sample data 40 according to any one of clauses 1 to 17 or for training a machine learning model according to clause 18.
22. A system 108 for generating sample data 40, the system comprising:
   - one or more processing devices 110;
   - one or more machine-readable hardware storage devices 112 comprising instructions that are executable by one or more processing devices 110 to perform operations comprising a computer implemented method 22 for generating sample data 40 according to any one of clauses 1 to 17.
23. A system 108 for training a machine learning model 42 for quality inspection of a photolithography mask, the system comprising:
   - one or more processing devices 110;
   - one or more machine-readable hardware storage devices 112 comprising instructions that are executable by one or more processing devices 110 to perform operations comprising a computer implemented method for training a machine learning model 42 for quality inspection of a photolithography mask 14 according to clause 18.

In summary, the invention relates to a computer implemented method for generating sample data, the method comprising: providing multiple mask models 24 of photolithography masks comprising structures 33; modifying the multiple mask models 24 of photolithography masks using a first machine learning model 28, wherein the first machine learning model 28 receives a mask model 24 of a photolithography mask 14 and a text 26 describing one or more desired modifications 38 and generates one or more modified mask models 34, 34' or images 36, 36' of the one or more modified mask models 34, 34'; generating sample data 40 comprising images 36, 36' of the multiple modified mask models 34, 34' of photolithography masks, where the generated sample data is configured for developing or evaluating a method for quality inspection of photolithography masks. The invention also relates to a corresponding training method and system.

### Reference number list

- 10, 10': Optical system
- 12: Light source
- 14: Photolithography mask
- 16: Illumination optics
- 17: Projection optics
- 18: Wafer plane
- 19: Projection section
- 20: Image sensor
- 22: Method
- 24: Mask model
- 26: Text
- 27: Further information
- 28: First machine learning model
- 30: Output
- 32: Binary image
- 33: Structure
- 34, 34': Modified mask model
- 36, 36', 36": Image
- 37: Label
- 38: Modification
- 39: Alternative
- 40: Sample data
- 42: Second machine learning model
- 44: Modified binary image
- 46: Text
- 48, 48': Modified text
- 49: Contour variation
- 50: CAD file
- 52: Modified CAD file
- 54: 3D image
- 56: Modified 3D image
- 58: Image comprising material properties
- 60: Image comprising modified material properties
- 62: Large language model
- 64: Integrated structure
- 66: Sample data generation
- 67: Diffusion process
- 68: Stochastic process step
- 70: Random image
- 72: Random image
- 74: Reverse stochastic process step
- 76: Conditional diffusion model
- 77: Reverse diffusion process
- 78: Condition
- 80: Latent conditional diffusion model
- 81: Reverse diffusion process
- 82: Latent space
- 84: Original image space
- 85: Mapping
- 86: Inverse mapping
- 88: Latent random sample
- 90: Latent representation
- 92: Inpainting mask
- 94: Inpainting region
- 95: Concatenation
- 96: Transformation
- 98: CLIP (image to text)
- 99: CLIP (text to image)
- 100: Cross-attention layer
- 102: Neural network
- 104: Time step embedding
- 106: Feature vector
- 108: System
- 110: Processing device
- 112: Machine-readable hardware storage device
- 114: Data analysis device
- 116: Text prompt
- 900: Attention mechanism
- 902: Token
- 902': Contextual information
- 904: Multilayer perceptron
- 906: Similarity function
- 906': Attention distribution
- 908: Aggregation function
- 910: Attention-based representation
- 912: Attention-weighted values
- 914: Query
- 916: Key
- 918: Values
- 920: Transformer block
- 922: Multihead attention
- 924: Add & norm layer
- 926: Feed forward neural network
- 928: Positional encoding

## Claims

1. A computer implemented method (22) for generating sample data (40), the method comprising:
- Providing multiple mask models (24) of photolithography masks (14) comprising structures (33);
- Modifying the multiple mask models (24) of photolithography masks (14) using a first machine learning model (28), wherein the first machine learning model (28) receives a mask model (24) of a photolithography mask (14) and a text (26) describing one or more desired modifications (38) as input and generates one or more modified mask models (34, 34') or images (36, 36') of the one or more modified mask models (34, 34') as output (30);
- Generating sample data (40) comprising images (36, 36') of the multiple modified mask models (34, 34') of photolithography masks (14), wherein the generated sample data (40) is configured for developing or evaluating a method for quality inspection of photolithography masks (14).

2. The method of any one of the preceding claims, wherein the desired modifications (38) comprise the introduction of defects in structures (33) of the mask model (24) of the photolithography mask (14).

3. The method of claim 2, wherein the generated sample data is configured for training a second machine learning model (42) for detecting defects in images (36, 36') of photolithography masks (14), wherein the sample data (40) comprises pairs of input images and reference images, each input image being an image (36) of a modified mask model (24) of a photolithography mask (14) and each reference image being an image (36) of the corresponding provided mask model (24) of the photolithography mask (14).

4. The method of any one of the preceding claims, wherein the desired modifications (38) comprise transformations of structures (33) of the mask model (24) of the photolithography mask (14).

5. The method of claim 4, wherein the generated sample data is configured for training a second machine learning model (42) for measuring deviations of structures (33) in images from corresponding structures in reference images, wherein the sample data comprises pairs of input images and reference images, each input image being an image (36) of a modified mask model (34) of a photolithography mask (14) and each reference image being an image (36) of the corresponding provided mask model (24) of the photolithography mask (14).

6. The method of any one of the preceding claims, wherein the desired modifications (38) comprise the introduction of structures (33) generated by a third machine learning model into the mask model (24) of the photolithography mask (14).

7. The method of any one of the preceding claims, wherein the desired modifications (38) comprise one or more contour variations (49) of one or more structures (33) of the mask model (33), and wherein the first machine learning model is trained to map a contour section of a structure (33) of a mask model (24) and one or more contour variations (49) to further contour points of the contour section.

8. The method of any one of the preceding claims, wherein the first machine learning model (28) receives two or multiple mask models (24) of photolithography masks and a text (26) describing one or more desired modifications (38) as input.

9. The method of any one of the preceding claims, wherein the first machine learning model (28) comprises a large language model (62).

10. The method of any one of the preceding claims, wherein the first machine learning model (28) comprises a diffusion model (76, 80).

11. The method of any one of the preceding claims, wherein the sample data (40) further comprises images (36, 36') of the multiple provided mask models (24) of photolithography masks (14) and/or labels (37) indicating the modified locations (38) in the mask model (24) of the photolithography mask (14).

12. The method of any one of the preceding claims, wherein the sample data (40) comprises pairs of input images and reference images, each input image being an image (36) of a modified mask model (24) of a photolithography mask (14) and each reference image being an image (36) of the corresponding provided mask model (24) of the photolithography mask (14).

13. The method of any one of the preceding claims, wherein an image of a mask model of a photolithography mask in the sample data is obtained using a simulation method that simulates an acquired image from a mask model of a photolithography mask, or by acquiring an image of a photolithography mask manufactured for the mask model.

14. A computer implemented method for training a machine learning model (42) for quality inspection of a photolithography mask (14), the method comprising:
- Generating sample data (40) according to any one of the preceding claims;
- Training the machine learning model (42) by modifying parameters of the machine learning model (42) by optimizing a loss function using sample data comprising the generated sample data (40).

15. A system (108) for generating sample data (40), the system comprising:
- one or more processing devices (110);
- one or more machine-readable hardware storage devices (112) comprising instructions that are executable by one or more processing devices (110) to perform operations comprising a computer implemented method (22) for generating sample data (40) according to any one of claims 1 to 13.
